(19) Europäisches Patentamt
European Patent Office
Office européen des brevets

(11) **EP 3 249 974 A1**

(12) **EUROPEAN PATENT APPLICATION**
published in accordance with Art. 153(4) EPC

(43) Date of publication:
**29.11.2017 Bulletin 2017/48**

(51) Int Cl.:
***H04W 36/34*** *(2009.01)*

(21) Application number: **15881473.1**

(22) Date of filing: **10.02.2015**

(86) International application number:
**PCT/CN2015/072646**

(87) International publication number:
**WO 2016/127311 (18.08.2016 Gazette 2016/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Huawei Technologies Co., Ltd.**
**Longgang District**
**Shenzhen, Guangdong 518129 (CN)**

(72) Inventors:
• **LIN, Bo**
 **Shenzhen**
 **Guangdong 518129 (CN)**

• **ZHANG, Liangliang**
 **Shenzhen**
 **Guangdong 518129 (CN)**
• **WANG, Hong**
 **Shenzhen**
 **Guangdong 518129 (CN)**

(74) Representative: **Gill Jennings & Every LLP**
**The Broadgate Tower**
**20 Primrose Street**
**London EC2A 2ES (GB)**

(54) **METHOD FOR TERMINAL TO ESTABLISH CONNECTION, SECOND NODE, FIRST TERMINAL AND SECOND TERMINAL**

(57)    The present invention provides a method for establishing a connection by a terminal, a second node, a first terminal, and a second terminal. The method includes: determining, by a second node, whether a currently connected first terminal needs to establish a connection to a first node, and if a determining result is yes, obtaining a pre-stored first access parameter corresponding to the first node, where the first node is a control node of a cell neighboring to a cell of the second node, the first terminal currently connects to the second node, the first access parameter is obtained by means of statistics collection according to a second access parameter reported by a second terminal, and the second terminal is a terminal connecting to the first node; and delivering, by the second node, the first access parameter to the first terminal, so that the first terminal connects to the first node according to the first access parameter. According to the present invention, a delay generated during cell handover of a terminal can be reduced, and user experience is improved.

A second node determines whether a currently connected first terminal needs to establish a connection to a first node, and if a determining result is yes, obtains a pre-stored first access parameter corresponding to the first node — 110

The second node delivers the first access parameter to the first terminal, so that the first terminal connects to the first node according to the first access parameter — 120

FIG. 1A

A second node determines whether a currently connected first terminal needs to be handed over to a first node, and if a determining result is yes, obtains a pre-stored first access parameter corresponding to the first node, where the first node is a control node of a cell neighboring to a cell of the second node, and the first terminal currently connects to the second node

101

The second node delivers the first access parameter to the first terminal, so that the first terminal is handed over to the first node according to the first access parameter

102

FIG. 1B

**Description**

**TECHNICAL FIELD**

The present invention relates to wireless communications technologies, and in particular, to a method for establishing a connection by a terminal, a second node, a first terminal, and a second terminal.

**BACKGROUND**

A mobile communications system requires not only a maximum capacity but also a wider coverage range, that is, the mobile communications system needs to cover any place to which user equipment (User Equipment, UE) moves.

In the prior art, cellular networking is used to resolve a frequency resource limitation problem, increase a system capacity, and expand coverage. The cellular networking is to divide one mobile communications service area into many coverage areas, referred to as cellular cells, with a regular hexagon as a basic geometric pattern. A transmitter with a relatively low power serves a cellular cell, and a given quantity of UEs are disposed within a relatively small area. When currently served UE accesses a neighboring cellular cell, to ensure service continuity, a mobile communications system needs to hand over the UE to the neighboring cell, that is, the UE is handed over from a currently connected base station to a base station of the neighboring cellular cell, so that a communications process is not interrupted.

However, according to a terminal handover method in the prior art, a relatively long delay may be generated in a handover process. This is unfavorable to user experience.

**SUMMARY**

The present invention provides a method for establishing a connection by a terminal, a second node, a first terminal, and a second terminal in multiple aspects, so as to reduce a delay generated when a terminal establishes a connection to a node.

A first aspect of the present invention provides a method for establishing a connection by a terminal, including:

   determining, by a second node, whether a currently connected first terminal needs to establish a connection to a first node, and if a determining result is yes, obtaining a pre-stored first access parameter corresponding to the first node, where the first node is a control node of a cell neighboring to a cell of the second node, the first terminal currently connects to the second node, the first access parameter is obtained by means of statistics collection according to a second access parameter reported by a second terminal, and the second terminal is a terminal connecting to the first node; and

   delivering, by the second node, the first access parameter to the first terminal, so that the first terminal connects to the first node according to the first access parameter.

In a first possible implementation, according to the first aspect, before the obtaining a pre-stored first access parameter corresponding to the first node, the method further includes:

   sending, by the second node to the second terminal, an instruction for reporting the second access parameter, where the second terminal is the terminal connecting to the first node; and

   receiving, by the second node, the second access parameter sent by the first node and reported by the second terminal, and storing the second access parameter.

In a second possible implementation, according to the first aspect, before the obtaining a pre-stored first access parameter corresponding to the first node, the method further includes:

   sending, by the second node to the first node, an instruction for reporting the second access parameter, so that the first node sends, to the second terminal, the instruction for reporting the second access parameter, where the second terminal is the terminal connecting to the first node; and

   receiving, by the second node, the second access parameter sent by the first node and reported by the second terminal, and storing the second access parameter.

In a third possible implementation, according to the first aspect, before the obtaining a pre-stored first access parameter corresponding to the first node, the method further includes:

   sending, by the second node to the first node, an instruction for reporting the second access parameter; and

receiving, by the second node, the second access parameter sent by the first node, and storing the second access parameter.

In a fourth possible implementation, according to the first aspect, before the obtaining a pre-stored first access parameter corresponding to the first node, the method further includes:

sending, by the second node to the second terminal, an instruction for reporting the second access parameter, where the second terminal is the terminal connecting to the first node; and
receiving, by the second node, the second access parameter reported by the second terminal.

In a fifth possible implementation, according to the first aspect or the first possible implementation to the fourth possible implementation, the second terminal is specifically a terminal connecting to the first node after disconnecting from the second node, or a terminal connecting to the first node while maintaining a connection to the second node.
In a sixth possible implementation, according to the first aspect or the first possible implementation to the fifth possible implementation, before the obtaining a pre-stored first access parameter corresponding to the first node, the method further includes:

consecutively obtaining, by the second node, N second access parameters corresponding to the first node, where N is a positive integer; and
if the second node determines that the N second access parameters have a same value, using the value of the N second access parameters as the final first access parameter corresponding to the first node.

In a seventh possible implementation, according to the first aspect or the first possible implementation to the sixth possible implementation, the first access parameter includes a timing advance and/or a terminal transmit power, and the second access parameter includes a timing advance and/or a terminal transmit power.
A second aspect of the present invention provides a method for establishing a connection by a terminal, including:

receiving, by a first terminal, a first access parameter sent by a second node, where the first access parameter is a first access parameter pre-stored by the second node and corresponding to a first node, the first access parameter is obtained by means of statistics collection according to a second access parameter reported by a second terminal, the second terminal is a terminal connecting to the first node, and the first node is a control node of a cell neighboring to a cell of the second node; and
connecting, by the first terminal, to the first node according to the first connection parameter.

In a first possible implementation, according to the second aspect, the second terminal is specifically a terminal connecting to the first node after disconnecting from the second node, or a terminal connecting to the first node while maintaining a connection to the second node.
In a second possible implementation, according to the second aspect or the first possible implementation, the first access parameter includes a timing advance and/or a terminal transmit power, and the second access parameter includes a timing advance and/or a terminal transmit power.
A third aspect of the present invention provides a method for establishing a connection by a terminal, including:

receiving, by a second terminal, an instruction that is for reporting a second access parameter and that is sent by a currently connected second node, where the second terminal is a terminal needing to connect to a first node, and the first node is a control node of a cell neighboring to a cell of the second node;
obtaining, by the second terminal, the second access parameter; and
connecting, by the second terminal, to the first node according to the second access parameter, and reporting the second access parameter to the second node by using the first node, or directly reporting the second access parameter to the second node, so that the second node collects statistics about the second access parameter to generate a first access parameter, and when the second node determines that a currently connected first terminal needs to establish a connection to the first node, obtains the pre-stored first access parameter corresponding to the first node, and delivers the first access parameter to the first terminal, so that the first terminal connects to the first node according to the first access parameter.

In a first possible implementation, according to the third aspect, the second terminal is specifically a terminal connecting to the first node after disconnecting from the second node, or a terminal connecting to the first node while maintaining a connection to the second node.
In a second possible implementation, according to the third aspect or the first possible implementation, the first access parameter includes a timing advance and/or a terminal transmit power, and the second access parameter includes a timing advance and/or a terminal transmit power.

A fourth aspect of the present invention provides a method for establishing a connection by a terminal, including:

receiving, by a second terminal, an instruction that is for reporting a second access parameter and that is sent by a currently connected first node, where the second access parameter is sent by the first node to the second node, the second node is a node connected to the second terminal before the second terminal establishes a connection to the first node, and the first node is a control node of a cell neighboring to a cell of the second node;

obtaining, by the second terminal, the second access parameter; and

sending, by the second terminal, the second access parameter to the second node by using the first node, or directly sending, by the second terminal, the second access parameter to the currently connected second node, so that the second node collects statistics about the second access parameter to generate a first access parameter, and when the second node determines that a currently connected first terminal needs to establish a connection to the first node, obtains the pre-stored first access parameter corresponding to the first node, and delivers the first access parameter to the first terminal, so that the first terminal connects to the first node according to the first access parameter.

In a first possible implementation, according to the fourth aspect, the second terminal is specifically a terminal connecting to the first node after disconnecting from the second node, or a terminal connecting to the first node while maintaining a connection to the second node.

In a second possible implementation, according to the fourth aspect or the first possible implementation, the first access parameter includes a timing advance and/or a terminal transmit power, and the second access parameter includes a timing advance and/or a terminal transmit power.

A fifth aspect of the present invention provides a second node, including:

a first judging unit, configured to: determine whether a currently connected first terminal needs to establish a connection to a first node, and if a determining result is yes, obtain a pre-stored first access parameter corresponding to the first node, where the first node is a control node of a cell neighboring to a cell of the second node, the first terminal currently connects to the second node, the first access parameter is obtained by means of statistics collection according to a second access parameter reported by a second terminal, and the second terminal is a terminal connecting to the first node; and

a first sending unit, configured to deliver the first access parameter to the first terminal, so that the first terminal connects to the first node according to the first access parameter.

In a first possible implementation, according to the fifth aspect, the second node further includes:

a second sending unit, configured to send, to the second terminal, an instruction for reporting the second access parameter, where the second terminal is the terminal connecting to the first node; and

a first receiving unit, configured to: receive the second access parameter sent by the first node and reported by the second terminal, and store the second access parameter.

In a second possible implementation, according to the fifth aspect, the second node further includes:

a second sending unit, configured to send, to the first node, an instruction for reporting the second access parameter, so that the first node sends, to the second terminal, the instruction for reporting the second access parameter, where the second terminal is the terminal connecting to the first node; and

a first receiving unit, configured to: receive the second access parameter sent by the first node and reported by the second terminal, and store the second access parameter.

In a third possible implementation, according to the fifth aspect, the second node further includes:

a second sending unit, configured to send, to the first node, an instruction for reporting the second access parameter; and

a first receiving unit, configured to: receive the second access parameter sent by the first node, and store the second access parameter.

In a fourth possible implementation, according to the fifth aspect, the second node further includes:

a second sending unit, configured to send, to the second terminal, an instruction for reporting the second access parameter, where the second terminal is the terminal connecting to the first node; and

a first receiving unit, configured to receive the second access parameter reported by the second terminal.

In a fifth possible implementation, according to the fifth aspect or the first possible implementation to the fourth possible implementation, the second node further includes a determining unit, and the determining unit is configured to:

consecutively obtain N second access parameters corresponding to the first node, where N is a positive integer; and if it is determined that the N second access parameters have a same value, use the value of the N second access parameters as the final first access parameter corresponding to the first node.

In a sixth possible implementation, according to the fifth aspect or the first possible implementation to the fifth possible implementation, the first access parameter includes a timing advance and/or a terminal transmit power, and the second access parameter includes a timing advance and/or a terminal transmit power.

A sixth aspect of the present invention provides a first terminal, including:

a second receiving unit, configured to receive a first access parameter sent by a second node, where the first access parameter is a first access parameter pre-stored by the second node and corresponding to a first node, the first node is a control node of a cell neighboring to a cell of the second node, the first access parameter is obtained by means of statistics collection according to a second access parameter reported by a second terminal, and the second terminal is a terminal connecting to the first node; and
a first connection unit, configured to connect to the first node according to the first connection parameter.

In a first possible implementation, according to the sixth aspect, the first access parameter includes a timing advance and/or a terminal transmit power, and the second access parameter includes a timing advance and/or a terminal transmit power.

A seventh aspect of the present invention provides a second terminal, including:

a third receiving unit, configured to receive an instruction that is for reporting a second access parameter and that is sent by a currently connected second node, where the second terminal is a terminal needing to connect to a first node, and the first node is a control node of a cell neighboring to a cell of the second node;
a first obtaining unit, configured to obtain the second access parameter; and
a second connection unit, configured to: connect to the first node according to the second access parameter, and report the second access parameter to the second node by using the first node, or directly report the second access parameter to the second node, so that the second node collects statistics about the second access parameter to generate a first access parameter, and when the second node determines that a currently connected first terminal needs to establish a connection to the first node, obtains the pre-stored first access parameter corresponding to the first node, and delivers the first access parameter to the first terminal, so that the first terminal connects to the first node according to the first access parameter.

In a first possible implementation, according to the seventh aspect, the first access parameter includes a timing advance and/or a terminal transmit power, and the second access parameter includes a timing advance and/or a terminal transmit power.

An eighth aspect of the present invention provides a second terminal, including:

a fourth receiving unit, configured to receive an instruction that is for reporting a second access parameter and that is sent by a currently connected first node, where the second access parameter is sent by the first node to the second node, the second node is a node connected to the second terminal before the second terminal establishes a connection to the first node, and the first node is a control node of a cell neighboring to a cell of the second node;
a second obtaining unit, configured to obtain the second access parameter; and
a third connection unit, configured to: send the second access parameter to the second node by using the first node, or directly send the second access parameter to the currently connected second node, so that the second node collects statistics about the second access parameter to generate a first access parameter, and when the second node determines that a currently connected first terminal needs to establish a connection to the first node, obtains the pre-stored first access parameter corresponding to the first node, and delivers the first access parameter to the first terminal, so that the first terminal connects to the first node according to the first access parameter.

In a first possible implementation, according to the eighth aspect, the first access parameter includes a timing advance and/or a terminal transmit power, and the second access parameter includes a timing advance and/or a terminal transmit power.

A ninth aspect of the present invention provides a second node, including at least one first processor and a first memory, where the first memory is configured to store executable program code, and the first processor runs, by reading the executable program code stored in the first memory, a program corresponding to the executable program code so as to:

determine whether a currently connected first terminal needs to establish a connection to a first node, and if a determining result is yes, obtain a pre-stored first access parameter corresponding to the first node, where the first node is a control node of a cell neighboring to a cell of the second node, the first terminal currently connects to the second node, the first access parameter is obtained by means of statistics collection according to a second access parameter reported by a second terminal, and the second terminal is a terminal connecting to the first node; and deliver the first access parameter to the first terminal, so that the first terminal connects to the first node according to the first access parameter.

A tenth aspect of the present invention provides a first terminal, including at least one second processor and a second memory, where the second memory is configured to store executable program code, and the second processor runs, by reading the executable program code stored in the second memory, a program corresponding to the executable program code so as to:

receive a first access parameter sent by a second node, where the first access parameter is a first access parameter pre-stored by the second node and corresponding to a first node, the first node is a control node of a cell neighboring to a cell of the second node, the first access parameter is obtained by means of statistics collection according to a second access parameter reported by a second terminal, and the second terminal is a terminal connecting to the first node; and connect to the first node according to the first connection parameter.

An eleventh aspect of the present invention provides a second terminal, including at least one third processor and a third memory, where the third memory is configured to store executable program code, and the third processor runs, by reading the executable program code stored in the third memory, a program corresponding to the executable program code so as to:

receive an instruction that is for reporting a second access parameter and that is sent by a currently connected second node, where the second terminal is a terminal needing to connect to a first node; obtain the second access parameter; and connect to the first node according to the second access parameter, where the first node is a control node of a cell neighboring to a cell of the second node, and report the second access parameter to the second node by using the first node, or directly report the second access parameter to the second node, so that the second node collects statistics about the second access parameter to generate a first access parameter, and when the second node determines that a currently connected first terminal needs to establish a connection to the first node, obtains the pre-stored first access parameter corresponding to the first node, and delivers the first access parameter to the first terminal, so that the first terminal connects to the first node according to the first access parameter.

A twelfth aspect of the present invention provides a second terminal, including at least one fourth processor and a fourth memory, where the fourth memory is configured to store executable program code, and the fourth processor runs, by reading the executable program code stored in the fourth memory, a program corresponding to the executable program code so as to:

receive, by the second terminal, an instruction that is for reporting a second access parameter and that is sent by a currently connected first node, where the second access parameter is sent by the first node to the second node, the second node is a node connected to the second terminal before the second terminal establishes a connection to the first node, and the first node is a control node of a cell neighboring to a cell of the second node; obtain, by the second terminal, the second access parameter; and send, by the second terminal, the second access parameter to the second node by using the first node, or directly send, by the second terminal, the second access parameter to the currently connected second node, so that the second node collects statistics about the second access parameter to generate a first access parameter, and when the second node determines that a currently connected first terminal needs to establish a connection to the first node, obtains the pre-stored first access parameter corresponding to the first node, and delivers the first access parameter to the first terminal, so that the first terminal connects to the first node according to the first access parameter.

According to the method for establishing a connection by a terminal, the second node, the first terminal, and the second terminal provided in the present invention, a second access parameter is obtained by means of statistics collection in advance to generate and store a first access parameter, so that when a currently connected first terminal needs to connect to a first node, the pre-stored first access parameter corresponding to the first node is obtained and directly delivered to the first terminal for use. This avoids as much as possible a delay caused by obtaining the first access parameter by the first terminal, so as to reduce a delay generated during cell handover of the terminal, and improve user experience.

**BRIEF DESCRIPTION OF DRAWINGS**

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.

FIG. 1A is a schematic flowchart of a method for establishing a connection by a terminal according to an embodiment of the present invention;
FIG. 1B is a schematic flowchart of a method for establishing a connection by a terminal according to another embodiment of the present invention;
FIG. 2 is a signaling diagram of a method for establishing a connection by a terminal according to still another embodiment of the present invention;
FIG. 3 is a signaling diagram of a method for establishing a connection by a terminal according to yet another embodiment of the present invention;
FIG. 4 is a schematic flowchart of a method for establishing a connection by a terminal according to another embodiment of the present invention;
FIG. 5 is a schematic flowchart of a method for establishing a connection by a terminal according to still another embodiment of the present invention;
FIG. 6 is a schematic flowchart of establishing a connection by a terminal in a dual connectivity scenario according to yet another embodiment of the present invention;
FIG. 7 is a schematic flowchart of a method for establishing a connection by a terminal according to another embodiment of the present invention;
FIG. 8 is a schematic flowchart of a method for establishing a connection by a terminal according to still another embodiment of the present invention;
FIG. 9 is a schematic flowchart of a method for establishing a connection by a terminal according to yet another embodiment of the present invention;
FIG. 10A is a schematic structural diagram of a second node according to another embodiment of the present invention;
FIG. 10B is a schematic structural diagram of a second node according to still another embodiment of the present invention;
FIG. 11 is a schematic structural diagram of a second node according to yet another embodiment of the present invention;
FIG. 12 is a schematic structural diagram of a first terminal according to another embodiment of the present invention;
FIG. 13 is a schematic structural diagram of a second terminal according to still another embodiment of the present invention;
FIG. 14 is a schematic structural diagram of a second terminal according to yet another embodiment of the present invention;
FIG. 15 is a schematic structural diagram of a second node according to another embodiment of the present invention;
FIG. 16 is a schematic structural diagram of a first terminal according to still another embodiment of the present invention;
FIG. 17 is a schematic structural diagram of a second terminal according to yet another embodiment of the present invention; and
FIG. 18 is a schematic structural diagram of a second terminal according to another embodiment of the present invention.

## DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

## Embodiment 1

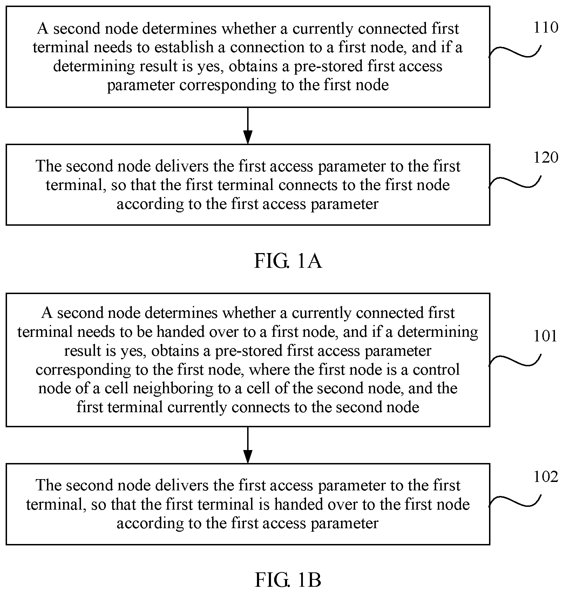

This embodiment provides a method for establishing a connection by a terminal, used for establishing a connection between a terminal and a node. A node in each of the following embodiments may be specifically a control node, for example, a node that is of a base station or the like and for establishing a connection to a terminal. For example, the base station is an evolved Node-B (eNB, evolved NodeB), a Node-B (NB, NodeB), a base transceiver system (base transceiver system), or an access point (access point). As shown in FIG. 1A, FIG. 1A is a schematic flowchart of the method for establishing a connection by a terminal according to this embodiment. This embodiment is executed by a second node.

Step 110: The second node determines whether a currently connected first terminal needs to establish a connection to a first node, and if a determining result is yes, obtains a pre-stored first access parameter corresponding to the first node.

The first node is a control node of a cell neighboring to a cell of the second node, the first terminal currently connects to the second node, the first access parameter is obtained by means of statistics collection according to a second access parameter reported by a second terminal, and the second terminal is a terminal connecting to the first node.

The first access parameter in this embodiment includes a timing advance (Timing Advance, TA) and/or a terminal transmit power. Correspondingly, the second access parameter also includes a timing advance (Timing Advance, TA) and/or a terminal transmit power. That is, when the second access parameter is a timing advance, the first access parameter is also a timing advance; when the second access parameter is a terminal transmit power, the first access parameter is also a terminal transmit power; or when the second access parameter includes both a timing advance and a terminal transmit power, the first access parameter also includes both a timing advance and a terminal transmit power. All the following embodiments have a same situation as the foregoing, and details are not described again. The terminal transmit power may be a range, and a terminal transmit power within a range is corresponding to one first access parameter. During interaction between a terminal and a base station, the terminal needs to constantly adjust a power, for example, progressively increase the power, so as to determine whether the base station can receive information sent by the terminal. When it is determined that the base station can receive the information sent by the terminal, a current power is determined as a terminal transmit power.

Step 120: The second node delivers the first access parameter to the first terminal, so that the first terminal connects to the first node according to the first access parameter.

Specifically, the first access parameter may be included in an RRC connection reconfiguration message (RRC Connection Reconfiguration), and RRC (English full name: Radio Resource Control) refers to radio resource control.

According to the method for establishing a connection by a terminal in this embodiment, a second access parameter is obtained by means of statistics collection in advance to generate and store a first access parameter, so that when a currently connected first terminal needs to connect to a first node, the pre-stored first access parameter corresponding to the first node is obtained and directly delivered to the first terminal for use. This avoids as much as possible a delay caused by obtaining the first access parameter, so as to reduce a delay generated during cell handover of the terminal, and improve user experience.

## Embodiment 2

This embodiment provides a method for establishing a connection by a terminal, used when a terminal is handed over from a current cell to a neighboring cell. This embodiment is executed by a second node. As shown in FIG. 1B, FIG. 1B is a schematic flowchart of the method for establishing a connection by a terminal according to this embodiment.

Step 101: The second node determines whether a currently connected first terminal needs to be handed over to a first node, and if a determining result is yes, obtains a pre-stored first access parameter corresponding to the first node, where the first node is a control node of a cell neighboring to a cell of the second node, and the first terminal currently connects to the second node.

The first access parameter is obtained by means of statistics collection according to a second access parameter reported by a second terminal, and the second terminal is a terminal handed over from the second node to the first node.

There may be one or more second terminals. The second node may directly use a latest second access parameter reported by the second terminal, as the first access parameter corresponding to the first node; or may obtain M second access parameters, obtain an average value of the M second access parameters, and select and use a second access parameter having a smallest absolute value of difference with the average value as the first access parameter corresponding to the first node and obtained by the second node, where if there are multiple second access parameters that have the smallest absolute value of difference with the average value, a newly reported second access parameter is used as the first access parameter corresponding to the first node and obtained by the second node. M is a positive integer.

Optionally, before step 101, the method further includes:

consecutively obtaining, by the second node, N second access parameters corresponding to the first node, where N is a positive integer; and

if the second node determines that the N second access parameters have a same value, using the value of the N second access parameters as the final first access parameter corresponding to the first node.

To obtain an accurate first access parameter, the second node may use, after a value of a second access parameter is stable, the second access parameter as the final first access parameter corresponding to the first node. After obtaining the N consecutive same second access parameters corresponding to the first node, the second node may use the second access parameter as the final first access parameter corresponding to the first node, and store the first access parameter for use in a subsequent process.

Certainly, the second node may also collect statistics about the first access parameter according to the second access parameter in another manner that may be specifically set according to an actual requirement, and details are not described herein.

Specifically, to determine whether the first terminal connecting to the second node needs to be handed over, the second node may perform the determining according to a measurement report reported by the first terminal or according to an RSRP (Reference Signal Receiving Power, reference signal received power) of the first terminal. This technology belongs to the prior art, and details are not described herein. Certainly, whether the first terminal needs to be handed over may also be determined in another manner, which is not limited herein.

Optionally, in this embodiment, a table of correspondence between a first access parameter and a first node may be preset. The table of correspondence may be preset in the second node, or may be set in another memory provided that the second node can obtain the table of correspondence when needed. The table of correspondence may be specifically set according to an actual requirement, and this is not limited herein. When the second node determines that the first terminal needs to be handed over to the first node, the first access parameter corresponding to the first node may be obtained according to the foregoing table of correspondence.

The first access parameter in this embodiment includes a timing advance (Timing Advance, TA) and/or a terminal transmit power. The terminal transmit power may be a range, and a terminal transmit power within a range is corresponding to one first access parameter. During interaction between a terminal and a base station, the terminal needs to constantly adjust a power, so as to determine whether the base station can receive information sent by the terminal. When it is determined that the base station can receive the information sent by the terminal, a current power is determined as a terminal transmit power.

Step 102: The second node delivers the first access parameter to the first terminal, so that the first terminal is handed over to the first node according to the first access parameter.

Specifically, the first access parameter may be included in an RRC connection reconfiguration message.

The second node directly delivers the obtained pre-stored first access parameter to the first terminal to be handed over, and after receiving the first access parameter, the first terminal may be handed over to the first node by using the first access parameter, that is, the first terminal disconnects a connection to the second node, and connects to the first node.

According to the method for establishing a connection by a terminal in this embodiment, a second access parameter is obtained by means of statistics collection in advance to generate and store a first access parameter, so that when a currently connected first terminal needs to be handed over to a first node, the pre-stored first access parameter corresponding to the first node is obtained and directly delivered to the first terminal for use. This avoids as much as possible a delay caused by obtaining the first access parameter, so as to improve user experience.

**Embodiment 3**

This embodiment further describes the method for establishing a connection by a terminal in the foregoing embodiment.

In this embodiment, before step 101, the method further includes:

sending, by the second node to the second terminal, an instruction for reporting the second access parameter, where the second terminal is the terminal connecting to the first node from the second node; and

receiving, by the second node, the second access parameter sent by the first node and reported by the second terminal, and storing the second access parameter.

When the second access parameter in this embodiment is a timing advance, the timing advance is generated by the first node according to a random access sequence sent by the second terminal. After the first node generates the timing advance, the timing advance is delivered to the second terminal, so that the second terminal is handed over to the first node according to the timing advance.

If the second access parameter is a transmit power, the second access parameter is generated by the second terminal, and the terminal transmit power P may be calculated according to the following formula:

$$P = \text{preambleInitialReceivedTargetPower} + \text{DELTA\_PREAMBLE} + (\text{PREAMBLE\_TRANSMISSION\_COUNTER} - 1) * \text{powerRampingStep},$$

where preambleInitialReceivedTargetPower is an initial transmit power, DELTA PREAMBLE is power compensation, PREAMBLE TRANSMISSION COUNTER is a quantity of power ramp times, and powerRampingStep is a power ramp step. The method belongs to the prior art, and a specific process is not described.

For reporting a terminal transmit power, the second terminal may choose to report only a quantity of power ramp times, and the second node determines the terminal transmit power according to the quantity of power ramp times and a preset initial transmit power, power compensation, and power ramp step. The initial transmit power, the power compensation, and the power ramp step are configured by a base station for the terminal. Those parameters configured by a same base station for terminals in a same cell are the same, and those parameters for different cells may be different.

The second terminal may further report a PHR (Power Headroom Report, power headroom report), so that the second node obtains a corresponding terminal transmit power according to the PHR. The terminal transmit power may be obtained by subtracting a power headroom carried in the PHR from a maximum terminal transmit power obtained by the second node, and a specific process is not described in detail.

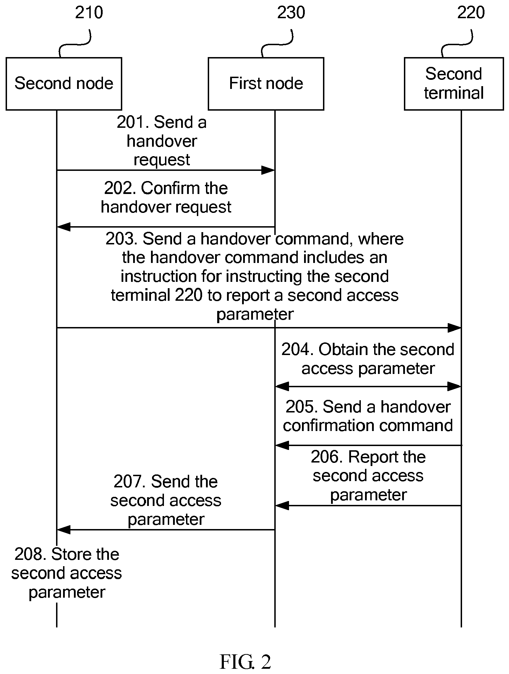

A specific example is provided below to describe the method for establishing a connection by a terminal in this embodiment. As shown in FIG. 2, FIG. 2 is a signaling diagram of the method for establishing a connection by a terminal according to this embodiment.

Step 201: A second node 210 determines that a second terminal 220 needs to be handed over to a first node 230, and sends a handover request corresponding to the second terminal 220 to the first node 230.

Specifically, the second node 210 determines the first node 230 for the second terminal 220 according to a measurement report of the second terminal 220 and an RRM (Radio Resource Management, radio resource management) algorithm, and sends context (Context) information of the second terminal 220 to the first node 230 along with the handover request.

Step 202: The first node 230 confirms the handover request.

That the first node 230 confirms the handover request indicates that the first node 230 prepares for upcoming handover of the second terminal 220, and returns, to the second node 210, a confirmation message that is of the handover request and that carries a C-RNTI (Cell Radio Network Temporary Identifier, cell radio network temporary identifier) pre-allocated to the second terminal 220 and another parameter. After receiving the confirmation message of the handover request, the second node 210 prepares to forward packet data to the first node 230. A technology for confirming the handover request belongs to the prior art, and details are not described herein.

Step 203: The second node 210 sends a handover command to the second terminal 220, to instruct the second terminal 220 to perform handover, and the handover command includes an instruction for instructing the second terminal 220 to report a second access parameter.

Specifically, the handover command refers to an RRC connection reconfiguration message.

Step 204: After receiving the handover command sent by the second node 210, the second terminal 220 implements uplink synchronization and downlink synchronization with the first node 230, and obtains the second access parameter.

A specific manner in which the second terminal 220 implements the uplink synchronization and the downlink synchronization with the first node 230 belongs to the prior art. Details are not described herein.

It should be noted that when the second access parameter is a timing advance, the second access parameter is a timing advance obtained by the second terminal 220 from the first node 230; or when the second access parameter is a terminal transmit power, the second access parameter is a second access parameter obtained by the second terminal 220 by constantly adjusting a power according to the foregoing embodiment.

Step 205: The second terminal 220 sends a handover confirmation command to the first node 230, where the handover confirmation command indicates that the second terminal 220 is handed over.

Step 206: The second terminal 220 reports the second access parameter to the first node 230.

It should be noted that the second access parameter reported in this step may also be carried in the handover confirmation command in step 205.

Specifically, the second access parameter reported in this step may be carried in an RRC connection reconfiguration complete message, because the RRC connection reconfiguration complete message is sent just after handover is completed, and no extra signaling needs to be added when the second access parameter is included in the message.

Step 207: After receiving the second access parameter reported by the second terminal 220, the first node 230 sends the second access parameter to the second node 210 by using an X2 interface.

It should be noted that the second access parameter reported in this step may also be carried in a UE context release (User Equipment Context release) message, because the second terminal 220 has completed a handover process at this time.

Step 208: After receiving the second access parameter sent by the first node 230, the second node 210 stores the second access parameter for use in a subsequent collection.

The second access parameter includes a timing advance and/or a terminal transmit power.

According to the method for establishing a connection by a terminal in this embodiment, a second node 210 directly delivers to a second terminal 220 an instruction for reporting a second access parameter, so that the second terminal 220 reports, after receiving the instruction for reporting the second access parameter, the second access parameter to the second node 210 by using a first node 230, and the second node 210 stores the received second access parameter for a subsequent collection of a first access parameter, so as to avoid an unnecessary delay generated because of obtaining the first access parameter when a first terminal is handed over from the second node 210 to the first node 230.

**Embodiment 4**

This embodiment further describes the method for establishing a connection by a terminal in the foregoing Embodiment 1 and Embodiment 2.

In this embodiment, before step 101, the method further includes:

sending, by the second node to the first node, an instruction for reporting the second access parameter, so that the first node sends, to the second terminal, the instruction for reporting the second access parameter, where the second terminal is the terminal connecting to the first node from the second node; and

receiving, by the second node, the second access parameter sent by the first node and reported by the second terminal, and storing the second access parameter.

When the second access parameter is a timing advance, the second access parameter is generated by the first node according to a random access sequence sent by the second terminal when the second terminal performs uplink synchronization with the first node, and the second terminal connects to the second node before performing the uplink synchronization with the first node. A manner for generating a terminal transmit power is the same as that in Embodiment 3, and details are not described herein again.

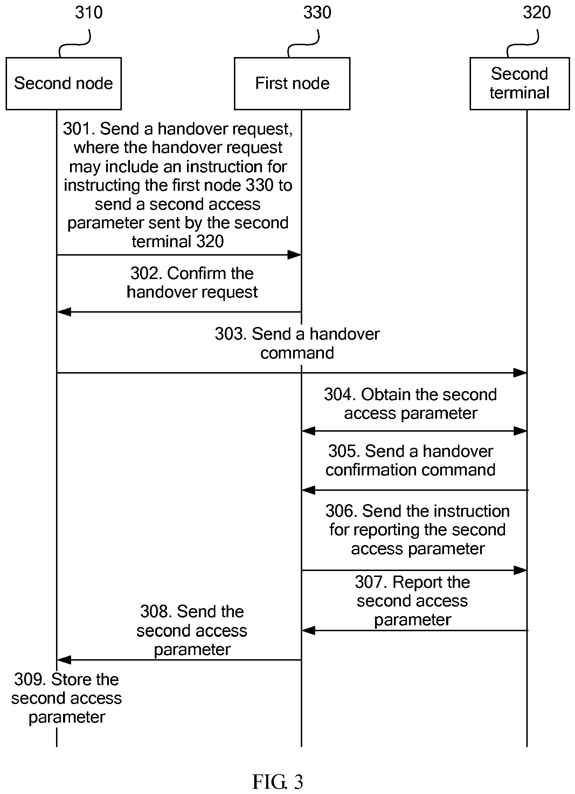

A specific example is provided below to describe the method for establishing a connection by a terminal in this embodiment. As shown in FIG. 3, FIG. 3 is a schematic flowchart of the method for establishing a connection by a terminal according to this embodiment.

Step 301: A second node 310 determines that a second terminal 320 needs to be handed over to the first node 330, and sends a handover request corresponding to the second terminal 320 to the first node 330, where the handover request may include an instruction for instructing the first node 330 to send a second access parameter, and the second access parameter is sent by the second terminal 320 to the first node 330.

Specifically, the first node 330 may send the second access parameter to the second node 310 after the second terminal 320 is handed over.

Step 302: The first node 330 confirms the handover request.

That the first node 330 confirms the handover request indicates that the first node 330 prepares for upcoming handover of the second terminal 320, and returns, to the second node 310, a confirmation message that is of the handover request and that carries a C-RNTI (Cell Radio Network Temporary Identifier, cell radio network temporary identifier) pre-allocated to the second terminal 320 and another parameter. After receiving the confirmation message of the handover request, the second node 310 prepares to forward packet data to the first node 330.

Step 303: The second node 310 sends a handover command to the second terminal 320, to instruct the second terminal 320 to perform handover.

Step 304: After receiving the handover command sent by the second node 310, the second terminal 320 implements uplink synchronization and downlink synchronization with the first node 320, and obtains the second access parameter.

A specific manner in which the second terminal 320 implements the uplink synchronization and the downlink synchronization with the first node 330 belongs to the prior art. Details are not described herein.

It should be noted that when the second access parameter is a timing advance, the second access parameter is a timing advance obtained by the second terminal 320 from the first node 330; or when the second access parameter is a terminal transmit power, the second access parameter is a second access parameter obtained by the second terminal 320 by constantly adjusting a power according to the foregoing embodiment.

Step 305: The second terminal 320 sends a handover confirmation command to the first node 330, where the handover confirmation command indicates that the second terminal 320 is handed over.

Step 306: After receiving the handover confirmation command sent by the second terminal 320, the first node 330 sends, to the second terminal, the instruction for reporting the second access parameter, to instruct the second terminal to report the second access parameter.

Step 307: After receiving the instruction that is for reporting the second access parameter and that is sent by the first node 330, the second terminal 320 reports the second access parameter for the handover.

Step 308: After receiving the second access parameter reported by the second terminal 320, the first node 330 sends the second access parameter to the second node 310 by using an X2 interface.

It should be noted that the second access parameter reported in this step may also be carried in a UE context release (UE Context release) message, because the second terminal 320 has completed a handover process at this time.

Step 309: After receiving the second access parameter sent by the first node 330, the second node 310 stores the second access parameter for use in a subsequent collection.

According to the method for establishing a connection by a terminal in this embodiment, a second node 310 sends a first node 330 an instruction for reporting a second access parameter, so that the first node 330 instructs, according to the instruction, a second terminal 320 to report the second access parameter, and the second access parameter is sent to the second node for storage, to be used by the second node to collect statistics about a first access parameter, and to be subsequently used by another terminal when needing to be handed over from the second node to the first node. This avoids as much as possible a delay caused by obtaining the first access parameter, so as to improve efficiency of establishing a connection by a terminal, and improve user experience.

**Embodiment 5**

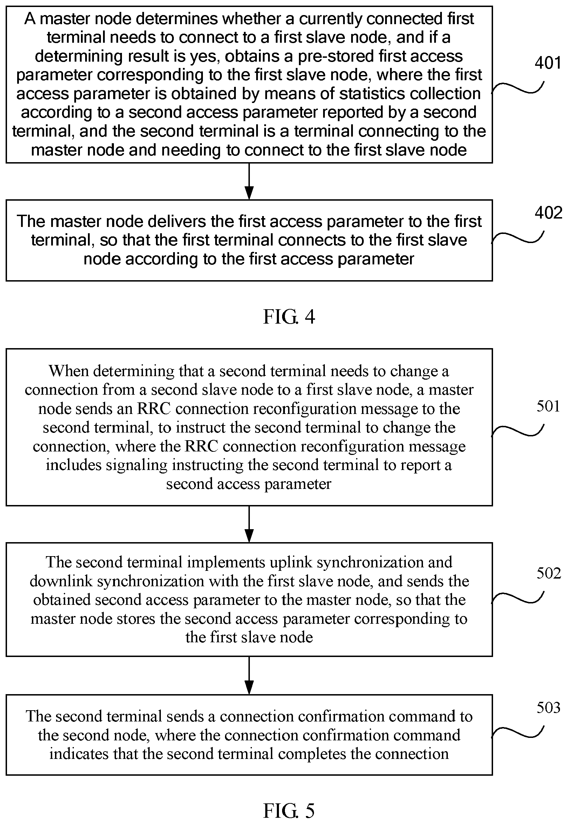

This embodiment provides a method for establishing a connection by a terminal, and the method for establishing a connection by a terminal is executed by a master node. As shown in FIG. 4, FIG. 4 is a schematic flowchart of the method for establishing a connection by a terminal according to this embodiment.

A scenario in this embodiment is a dual connectivity scenario, that is, a first terminal may further connect to another node after connecting to a master node, to increase data transmission, and the another node is referred to as a slave node. That is, the first terminal can perform information transmission with not only the master node but also the slave node. However, both connection and connection release are controlled by the master node, and the slave node is only responsible for data transmission. That is, the master node and a first slave node in this embodiment are corresponding to a second node and a first node respectively.

Step 401: The master node determines whether a currently connected first terminal needs to connect to the first slave node, and if a determining result is yes, obtains a pre-stored first access parameter corresponding to the first slave node, where the first access parameter is obtained by means of statistics collection according to a second access parameter reported by a second terminal, and the second terminal is a terminal connecting to the master node and needing to connect to the first slave node.

There may be one or more second terminals. The master node may directly use a latest second access parameter reported by the second terminal, as the first access parameter corresponding to the first slave node; or may obtain M second access parameters, obtain an average value of the M second access parameters, and select and use a second access parameter having a smallest absolute value of difference with the average value as the first access parameter corresponding to the first slave node and obtained by the master node, where if there are multiple second access parameters that have the smallest absolute value of difference with the average value, a newly reported second access parameter is used as the first access parameter corresponding to the first slave node and obtained by the master node. Alternatively, a time segment may be selected, and a most frequently reported second access parameter within the time segment is obtained by means of statistics collection and used as the first access parameter corresponding to the first slave node and obtained by the master node; or some second access parameters are selected, and a most frequent second access parameter is obtained by means of statistics collection and used as the first access parameter corresponding to the first slave node and obtained by the master node, where when there are multiple most frequent second access parameters, a newly reported and most frequent second access parameter is used as the first access parameter corresponding to the first slave node and obtained by the master node. Certainly, the master node may also collect statistics about the first access parameter according to the second access parameter in another manner that may be specifically set according to an actual requirement, and details are not described herein. M is a positive integer.

Whether the first terminal needs to connect to the first slave node includes at least the following two cases. A first case is: The first terminal currently connects only to the master node without connecting to a slave node, and needs to maintain a connection to the master node and add a connection to the first slave node. A second case is: The first terminal currently connects to the master node and a second slave node, and needs to maintain a connection to the master node, and connect to the first slave node after disconnecting from the second slave node.

All of the master node, the first slave node, and the second slave node are wireless communications nodes, such as a base station.

For the second case, specifically, to determine whether the first terminal connecting to the first slave node needs to change a connection, the master node may perform the determining according to a measurement report reported by the first terminal or according to an RSRP (Reference Signal Receiving Power, reference signal received power) of the first terminal. This technology belongs to the prior art, and details are not described herein.

In this embodiment, a table of correspondence between a first access parameter and a first slave node may be preset. The table of correspondence may be preset in the master node, or may be set in another memory provided that the master node can obtain the table of correspondence when needed. The table of correspondence may be specifically set according to an actual requirement, and this is not limited herein. When the master node determines that the first terminal needs to connect to the first slave node, the first access parameter corresponding to the first slave node may be obtained according to the foregoing table of correspondence.

The first access parameter in this embodiment includes a timing advance and/or a terminal transmit power, and the second access parameter includes a timing advance and/or a terminal transmit power. A specific manner in which the timing advance and the terminal transmit power are generated is the same as that in the foregoing embodiment, and details are not described herein again.

Step 402: The master node delivers the first access parameter to the first terminal, so that the first terminal connects to the first slave node according to the first access parameter.

Specifically, the first access parameter may be included in an RRC connection reconfiguration message.

The master node directly delivers the obtained pre-stored first access parameter to the first terminal that is to change/add a connection to a slave node, and after receiving the first access parameter, the first terminal may connect to the first slave node by using the first access parameter.

Optionally, before step 401, the method further includes:

consecutively obtaining, by the master node, N second access parameters corresponding to the first slave node, where N is a positive integer; and
if the master node determines that the N second access parameters have a same value, using the value of the N second access parameters as the final first access parameter corresponding to the first slave node.

To obtain an accurate first access parameter, the master node may use, after a value of a second access parameter is stable, the second access parameter as the final first access parameter corresponding to the first slave node. After obtaining the N consecutive same second access parameters corresponding to the first slave node, the master node may use the second access parameter as the final first access parameter corresponding to the first slave node, and store the first access parameter for use in a subsequent process. Certainly, there are many other methods for determining the final first access parameter. The method may be specifically set according to an actual requirement, and details are not described herein.

According to the method for establishing a connection by a terminal in this embodiment, a second access parameter is obtained by means of statistics collection in advance to generate and store a first access parameter, so that when a currently connected first terminal connects to a first slave node, the pre-stored first access parameter corresponding to the first slave node is obtained and directly delivered to the first terminal for use. This avoids as much as possible a delay caused by obtaining the first access parameter, so as to improve user experience.

**Embodiment 6**

This embodiment further describes the method for establishing a connection by a terminal in the foregoing embodiment.

In this embodiment, before whether the currently connected first terminal needs to connect to the first slave node is determined, the method further includes:

sending, by the master node to the second terminal, an instruction for reporting the second access parameter, where the second terminal is a terminal that is to connect to the first slave node; and

receiving, by the master node, the second access parameter reported by the second terminal.

Specifically, the instruction that is for reporting the second access parameter and that is sent to the second terminal may be included in an RRC connection reconfiguration message. If the second access parameter is a timing advance, the second access parameter is generated by the first slave node according to a random access sequence sent by the second terminal when the second terminal performs uplink synchronization with the first slave node; or if the second access parameter is a terminal transmit power, the terminal transmit power is generated in a manner the same as that in the foregoing embodiment, and details are not described herein again.

As shown in FIG. 5, FIG. 5 is a schematic flowchart of establishing a connection by a terminal in a dual connectivity scenario according to this embodiment, and the foregoing second case is used as an example for description. The second terminal connects to two nodes: the master node and the second slave node; and the second terminal needs to connect to the first slave node. A specific process in which the second terminal changes a current connection from the second slave node to the first slave node is as follows:

Step 501: When determining that the second terminal needs to change the connection from the second slave node to the first slave node, the master node sends an RRC connection reconfiguration message to the second terminal, to instruct the second terminal to change the connection, where the RRC connection reconfiguration message includes signaling instructing the second terminal to report the second access parameter.

The second access parameter includes a timing advance and/or a terminal transmit power.

Step 502: The second terminal implements uplink synchronization and downlink synchronization with the first slave node, and sends the obtained second access parameter to the master node, so that the master node stores the second access parameter corresponding to the first slave node.

A specific manner in which the second terminal implements the uplink synchronization and the downlink synchronization with the first slave node belongs to the prior art. Details are not described herein.

Step 503: The second terminal sends a connection confirmation command to the master node, where the connection confirmation command indicates that the second terminal completes the connection.

According to the method for establishing a connection by a terminal in this embodiment, a master node collects statistics about a second access parameter obtained by a second terminal when connecting to a first slave node from a second slave node, to generate and store a first access parameter, so that subsequently, the first access parameter is directly delivered to a first terminal for use when the first terminal needs to connect to the first slave node from the second slave node. This avoids as much as possible a delay caused by obtaining the first access parameter by the first terminal, so as to improve efficiency of establishing a connection by a terminal, and improve user experience.

**Embodiment 7**

This embodiment further describes the method for establishing a connection by a terminal in Embodiment 5.

In this embodiment, before the pre-stored first access parameter corresponding to the first node is obtained, the method further includes:

sending, by the master node, the first slave node an instruction for reporting the second access parameter; and receiving the second access parameter sent by the first slave node, and storing the second access parameter.

Specifically, the sent instruction for reporting the second access parameter may be included in a slave node addition request (SeNB Addition Request) message.

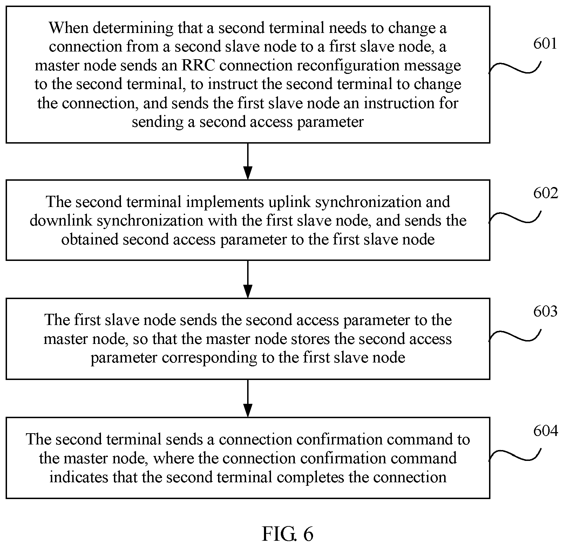

Specifically, as shown in FIG. 6, FIG. 6 is a schematic flowchart of establishing a connection by a terminal in a dual connectivity scenario according to this embodiment, and the foregoing second case is used as an example for description. The second terminal connects to two nodes: the master node and the second slave node; and the second terminal needs to connect to the first slave node. A specific process in which the second terminal changes a current connection from the second slave node to the first slave node is as follows:

Step 601: When determining that the second terminal needs to change the connection from the second slave node to the first slave node, the master node sends an RRC (Radio Resource Control, radio resource control) connection reconfiguration message to the second terminal, to instruct the second terminal to change the connection, and sends the first slave node an instruction for sending the second access parameter.

The second access parameter includes a timing advance and/or a terminal transmit power.

Step 602: The second terminal implements uplink synchronization and downlink synchronization with the first slave node, and sends the obtained second access parameter to the first slave node.

A specific manner in which the second terminal implements the uplink synchronization and the downlink synchronization with the first slave node belongs to the prior art. Details are not described herein. The second access parameter may include an identifier of the second terminal and/or an identifier of the master node.

Step 603: The first slave node sends the second access parameter to the master node, so that the master node stores the second access parameter corresponding to the first slave node.

Step 604: The second terminal sends a connection confirmation command to the master node, where the connection confirmation command indicates that the second terminal completes the connection.

Optionally, the RRC connection reconfiguration message may include signaling instructing the second terminal to report the second access parameter, so that after the second terminal reports the second access parameter to the first node, an operation of sending the second access parameter to the master node by the first node may be triggered.

According to the method for establishing a connection by a terminal in this embodiment, a master node collects statistics about a second access parameter obtained by a second terminal when connecting to a first slave node from a second slave node, to generate and store a first access parameter, so that subsequently, the first access parameter is directly delivered to a first terminal for use when the first terminal needs to connect to the first slave node from the second slave node. This avoids as much as possible a delay caused by obtaining the first access parameter by the first terminal, so as to improve efficiency of establishing a connection by a terminal, and improve user experience.

It should be noted that in the foregoing embodiment, the timing advance is generated by the first slave node, and therefore, the master node may also directly obtain the generated timing advance from the first slave node.

Specifically, before the pre-stored first access parameter corresponding to the first slave node is obtained, the method further includes:

sending an instruction for obtaining the timing advance to the first slave node, so that the first slave node sends the timing advance to the master node, where the timing advance is generated by the first slave node according to a random sequence sent by the second terminal when the second terminal connects to the first slave node; and receiving the timing advance sent by the first slave node, and storing the timing advance.

That is, to obtain the timing advance, the master node may not need to instruct the second terminal to perform reporting, and the timing advance is directly sent by the first slave node to the master node. This can reduce an information interaction operation, and lighten network load.

The second terminal in each of the foregoing embodiments may be specifically a terminal connecting to a first node after disconnecting from a second node, or a terminal connecting to a first node while maintaining a connection to a second node.

**Embodiment 8**

This embodiment provides a method for establishing a connection by a terminal, and the method for establishing a connection by a terminal is executed by a first terminal, that is, the first terminal in the foregoing embodiments.

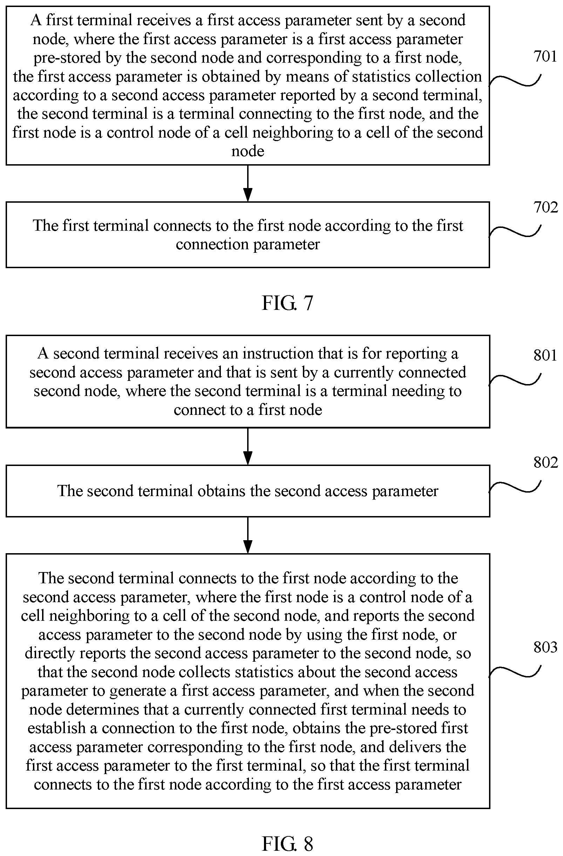

As shown in FIG. 7, FIG. 7 is a schematic flowchart of the method for establishing a connection by a terminal according to this embodiment.

Step 701: The first terminal receives a first access parameter sent by a second node, where the first access parameter is a first access parameter pre-stored by the second node and corresponding to a first node, the first access parameter is obtained by means of statistics collection according to a second access parameter reported by a second terminal, the second terminal is a terminal connecting to the first node, and the first node is a control node of a cell neighboring to a cell of the second node.

The first access parameter in this embodiment includes a timing advance and/or a terminal transmit power, and correspondingly, the second access parameter includes a timing advance and/or a terminal transmit power. The terminal transmit power may be a range, and a terminal transmit power within a range is corresponding to one first access parameter. During interaction between a terminal and a base station, the terminal needs to constantly adjust a power, for example, progressively increase the power, so as to determine whether the base station can receive information sent by the terminal. When it is determined that the base station can receive the information sent by the terminal, a current power is determined as a terminal transmit power.

The first terminal currently connects to the second node, and if the second node determines that the first terminal needs to establish a connection to the first node, the second node delivers the pre-stored first access parameter corresponding to the first node to the first terminal. Specifically, the first access parameter may be included in an RRC connection reconfiguration message. That is, when determining that the first terminal needs to establish a connection to the first node, the second node sends the RRC connection reconfiguration message to the first terminal. The RRC connection reconfiguration message includes the pre-stored first access parameter corresponding to the first node.

Certainly, the first access parameter may also be separately sent by the second node, for example, sent after the RRC connection reconfiguration message is sent.

The second terminal is specifically a terminal connecting to the first node after disconnecting from the second node, or a terminal connecting to the first node while maintaining a connection to the second node. A specific situation is the same as that described in the foregoing embodiment, and details are not described herein again.

Step 702: The first terminal connects to the first node according to the first connection parameter.

The first terminal may connect to the first node according to the first connection parameter after receiving the first connection parameter.

According to the method for establishing a connection by a terminal in this embodiment, a second node collects statistics about a second access parameter in advance to generate and store a first access parameter, so that when a currently connected first terminal needs to connect to a first node, the first access parameter that is obtained by means of statistics collection in advance and is corresponding to the first node is obtained and directly delivered to the first terminal for use. This avoids as much as possible a delay caused by obtaining the first access parameter by the first terminal, so as to reduce a delay generated during cell handover of the terminal, and improve user experience.

**Embodiment 9**

This embodiment provides a method for establishing a connection by a terminal, and this embodiment is executed by a second terminal.

As shown in FIG. 8, FIG. 8 is a schematic flowchart of the method for establishing a connection by a terminal according to this embodiment.

Step 801: The second terminal receives an instruction that is for reporting a second access parameter and that is sent by a currently connected second node, where the second terminal is a terminal needing to connect to a first node.

The second terminal in this embodiment is specifically a terminal connecting to the first node after disconnecting from the second node, or a terminal connecting to the first node while maintaining a connection to the second node. A specific process is the same as that in the foregoing embodiment, and details are not described herein again. The second access parameter includes a timing advance and/or a terminal transmit power.

Step 802: The second terminal obtains the second access parameter.

A manner in which the second terminal obtains the second access parameter in this step is the same as that in the prior art, and details are not described herein.

Step 803: The second terminal connects to the first node according to the second access parameter, where the first node is a control node of a cell neighboring to a cell of the second node, and reports the second access parameter to the second node by using the first node, or directly reports the second access parameter to the second node, so that the second node collects statistics about the second access parameter to generate a first access parameter, and when the second node determines that a currently connected first terminal needs to establish a connection to the first node, obtains the pre-stored first access parameter corresponding to the first node, and delivers the first access parameter to the first terminal, so that the first terminal connects to the first node according to the first access parameter.

A process in which the second terminal reports the second access parameter to the second node by using the first node, or a process in which the second terminal directly reports the second access parameter to the second node is the same as that in the foregoing embodiment, and details are not described herein again. A process in which the first terminal connects to the first node according to the first access parameter is also the same as that in the foregoing embodiment, and details are not described herein again. The first access parameter includes a timing advance and/or a terminal transmit power.

According to the method for establishing a connection by a terminal in this embodiment, a second terminal sends a second access parameter to a second node, so that the second node collects statistics about the second access parameter to generate and store a first access parameter, and in a subsequent communications process, when a currently connected first terminal needs to connect to a first node, the second node obtains the first access parameter that is obtained by means of statistics collection in advance and is corresponding to the first node, and directly delivers the first access parameter to the first terminal for use. This avoids as much as possible a delay caused by obtaining the first access parameter by the first terminal, so as to reduce a delay generated during cell handover of the terminal, and improve user experience.

**Embodiment 10**

This embodiment provides a method for establishing a connection by a terminal, and this embodiment is executed by a second terminal.

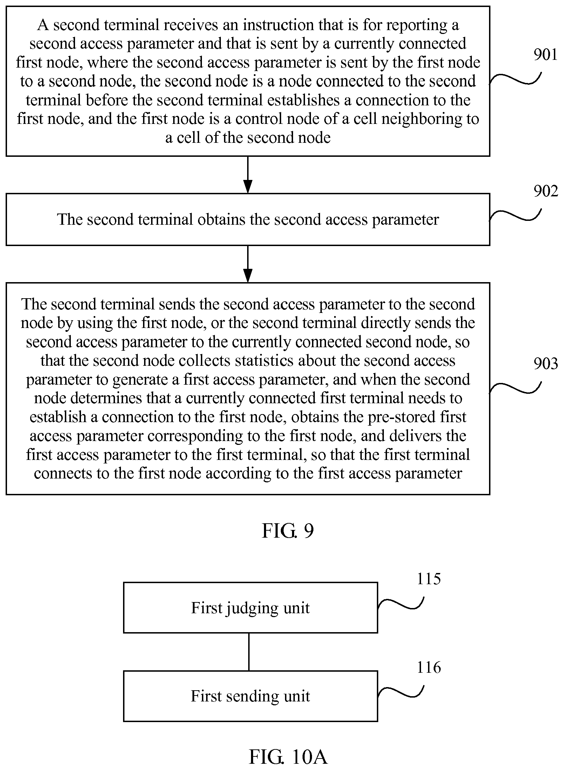

As shown in FIG. 9, FIG. 9 is a schematic flowchart of the method for establishing a connection by a terminal according to this embodiment.

Step 901: The second terminal receives an instruction that is for reporting a second access parameter and that is sent by a currently connected first node, where the second access parameter is sent by the first node to a second node, the second node is a node connected to the second terminal before the second terminal establishes a connection to the first node, and the first node is a control node of a cell neighboring to a cell of the second node.

The second terminal is specifically a terminal connecting to the first node after disconnecting from the second node, or a terminal connecting to the first node while maintaining a connection to the second node. A specific process is the same as that in the foregoing embodiment, and details are not described herein again. The second access parameter includes a timing advance and/or a terminal transmit power.

Step 902: The second terminal obtains the second access parameter.

A manner in which the second terminal obtains the second access parameter in this step is the same as that in the prior art, and details are not described herein.

Step 903: The second terminal sends the second access parameter to the second node by using the first node, or the second terminal directly sends the second access parameter to the currently connected second node, so that the second node collects statistics about the second access parameter to generate a first access parameter, and when the second node determines that a currently connected first terminal needs to establish a connection to the first node, obtains the pre-stored first access parameter corresponding to the first node, and delivers the first access parameter to the first terminal, so that the first terminal connects to the first node according to the first access parameter.

A process in which the second terminal reports the second access parameter to the second node by using the first node is the same as that in the foregoing embodiment, and details are not described herein again. A process in which the first terminal connects to the first node according to the first access parameter is also the same as that in the foregoing embodiment, and details are not described herein again. The first access parameter includes a timing advance and/or a terminal transmit power.

According to the method for establishing a connection by a terminal in this embodiment, a second terminal sends a second access parameter to a second node, so that the second node collects statistics about the second access parameter to generate and store a first access parameter, and in a subsequent communications process, when a currently connected first terminal needs to connect to a first node, the first access parameter that is obtained by means of statistics collection in advance and is corresponding to the first node is obtained and directly delivered to the first terminal for use. This avoids as much as possible a delay caused by obtaining the first access parameter, so as to reduce a delay generated during cell handover of the terminal, and improve user experience.

Persons of ordinary skill in the art may understand that all or a part of the steps of the foregoing method embodiments may be implemented by a program instructing relevant hardware. The program may be stored in a computer readable storage medium. When the program runs, the steps of the foregoing method embodiments are performed. The foregoing storage medium includes: any medium that can store program code, such as a ROM, a RAM, a magnetic disk, or an optical disc.

**Embodiment 11**

This embodiment provides a second node, and the second node is configured to execute the method for establishing a connection by a terminal in the foregoing embodiment.

As shown in FIG. 10A, FIG. 10A is a schematic structural diagram of the second node according to this embodiment. The second node includes a first judging unit 115 and a first sending unit 116.

The first judging unit 115 is configured to: determine whether a currently connected first terminal needs to establish a connection to a first node, and if a determining result is yes, obtain a pre-stored first access parameter corresponding to the first node, where the first node is a control node of a cell neighboring to a cell of the second node, the first terminal currently connects to the second node, the first access parameter is obtained by means of statistics collection according to a second access parameter reported by a second terminal, and the second terminal is a terminal connecting to the first node. The first sending unit 116 is configured to deliver the first access parameter obtained by the first judging unit 115 to the first terminal, so that the first terminal connects to the first node according to the first access parameter.

Both the first access parameter and the second access parameter in this embodiment include a timing advance (Timing Advance, TA) and/or a terminal transmit power. The terminal transmit power may be a range, and a terminal transmit power within a range is corresponding to one first access parameter. During interaction between a terminal and a base station, the terminal needs to constantly adjust a power, for example, progressively increase the power, so as to determine whether the base station can receive information sent by the terminal. When it is determined that the base station can receive the information sent by the terminal, a current power is determined as a terminal transmit power.

Specifically, the first access parameter may be included in an RRC connection reconfiguration message. The second terminal is specifically a terminal connecting to the first node after disconnecting from the second node, or a terminal connecting to the first node while maintaining a connection to the second node.

A manner in which the first access parameter is obtained by means of statistics collection according to the second access parameter reported by the second terminal is the same as that in the foregoing embodiment, and details are not described herein again.

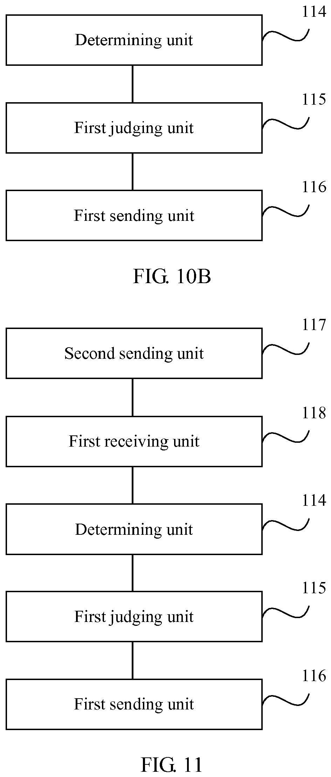

Optionally, as shown in FIG. 10B, the second node in this embodiment further includes a determining unit 114. The determining unit 114 is configured to:

consecutively obtain N second access parameters corresponding to the first node, where N is a positive integer; and if it is determined that the N second access parameters have a same value, use the value of the N second access parameters as the final first access parameter corresponding to the first node.

A specific operation process of the determining unit 114 is the same as that in Embodiment 2, and details are not described herein again.

According to the second node in this embodiment, a second access parameter is obtained by means of statistics collection in advance to generate and store a first access parameter, so that when a currently connected first terminal needs to connect to a first node, the first access parameter that is obtained by means of statistics collection in advance and is corresponding to the first node is obtained and directly delivered to the first terminal for use. This avoids as much as possible a delay caused by obtaining the first access parameter by the first terminal, so as to reduce a delay generated during cell handover of the terminal, and improve user experience.

**Embodiment 12**

This embodiment further describes the second node in Embodiment 11 in detail. As shown in FIG. 11, FIG. 11 is a schematic structural diagram of a second node according to this embodiment. In addition to the first judging unit 115 and the first sending unit 116 described in Embodiment 11, the second node in this embodiment further includes a second sending unit 117 and a first receiving unit 118.

The second sending unit 117 is configured to send, to the second terminal, an instruction for reporting the second access parameter, where the second terminal is the terminal connecting to the first node. The first receiving unit 118 is configured to: receive the second access parameter sent by the first node and reported by the second terminal, and store the second access parameter.

If the determining unit 114 is included, as shown in FIG. 11, the first receiving unit 118 is connected to the determining unit 114.

In this embodiment, if the second terminal is the terminal handed over to the first node, that is, the terminal disconnecting from the second node and establishing a connection to the first node, the second node needs to send, before the second terminal disconnects from the second node, the instruction for reporting the second access parameter; or if in a dual connectivity scenario, the second terminal connects to the first node without disconnecting from the second node, the second node may send the second terminal at any time the instruction for reporting the second access parameter. A specific process is the same as that in the foregoing embodiment, and details are not described herein again.

According to the second node in this embodiment, a procedure in which a second terminal reports a second access parameter is triggered, and the second access parameter is obtained by means of statistics collection to generate and store a first access parameter, so that when a currently connected first terminal needs to connect to a first node, the first access parameter that is obtained by means of statistics collection in advance and is corresponding to the first node is obtained and directly delivered to the first terminal for use. This avoids as much as possible a delay caused by obtaining the first access parameter, so as to reduce a delay generated during cell handover of the terminal, and improve user experience.

**Embodiment 13**

This embodiment further describes the second node in Embodiment 11 in detail. As shown in FIG. 11, FIG. 11 is a schematic structural diagram of a second node according to this embodiment. In addition to the first judging unit 115 and the first sending unit 116 described in Embodiment 11, the second node in this embodiment further includes a second sending unit 117 and a first receiving unit 118.

The second sending unit 117 in this embodiment is configured to send, to the first node, an instruction for reporting the second access parameter, so that the first node sends, to the second terminal, the instruction for reporting the second access parameter, where the second terminal is the terminal connecting to the first node. The first receiving unit 118 is configured to: receive the second access parameter sent by the first node and reported by the second terminal, and store the second access parameter.

According to the second node in this embodiment, a first node forwards an instruction for reporting a second access parameter, the forwarded second access parameter is received by using the first node, and the second access parameter is obtained by means of statistics collection to generate and store a first access parameter, so that when a currently connected first terminal needs to connect to the first node, the first access parameter that is obtained by means of statistics collection in advance and is corresponding to the first node is obtained and directly delivered to the first terminal for use. This avoids as much as possible a delay caused by obtaining the first access parameter, so as to reduce a delay generated during cell handover of the terminal, and improve user experience.

**Embodiment 14**

This embodiment further describes the second node in Embodiment 11 in detail. As shown in FIG. 11, FIG. 11 is a schematic structural diagram of a second node according to this embodiment. In addition to the first judging unit 115 and the first sending unit 116 described in Embodiment 11, the second node in this embodiment further includes a second sending unit 117 and a first receiving unit 118.

The second sending unit 117 in this embodiment is configured to send, to the first node, an instruction for reporting the second access parameter. The first receiving unit 118 is configured to: receive the second access parameter sent by the first node, and store the second access parameter.

The second access parameter in this embodiment is specifically a timing advance. The timing advance is sent by the first node to the second terminal. Therefore, the first node itself may learn the timing advance, and the second node may directly obtain the second access parameter from the first node.

In this embodiment, a second node directly obtains a second access parameter from a first node, and collects statistics about the second access parameter to generate and store a first access parameter, so that when a currently connected first terminal needs to connect to the first node, the first access parameter that is obtained by means of statistics collection in advance and is corresponding to the first node is obtained and directly delivered to the first terminal for use. This avoids as much as possible a delay caused by obtaining the first access parameter, so as to reduce a delay generated during cell handover of the terminal, and improve user experience.

**Embodiment 15**

This embodiment further describes the second node in Embodiment 11 in detail. As shown in FIG. 11, FIG. 11 is a schematic structural diagram of a second node according to this embodiment. In addition to the first judging unit 115 and the first sending unit 116 described in Embodiment 11, the second node in this embodiment further includes a second sending unit 117 and a first receiving unit 118.

The second sending unit 117 in this embodiment is configured to send, to the second terminal, an instruction for reporting the second access parameter, where the second terminal is the terminal connecting to the first node. The first receiving unit 118 is configured to receive the second access parameter reported by the second terminal.

The scenario described in this embodiment is a dual connectivity scenario, that is, the first node directly sends, to the second terminal, the instruction for reporting the second access parameter, and receives the second access parameter directly reported by the second terminal. A specific operation is the same as that in the foregoing embodiment, and details are not described herein again.

In this embodiment, a second node directly obtains a second access parameter from a second terminal, and collects statistics about the second access parameter to generate and store a first access parameter, so that when a currently connected first terminal needs to connect to a first node, the first access parameter that is obtained by means of statistics collection in advance and is corresponding to the first node is obtained and directly delivered to the first terminal for use. This avoids as much as possible a delay caused by obtaining the first access parameter, so as to reduce a delay generated during cell handover of the terminal, and improve user experience.

**Embodiment 16**

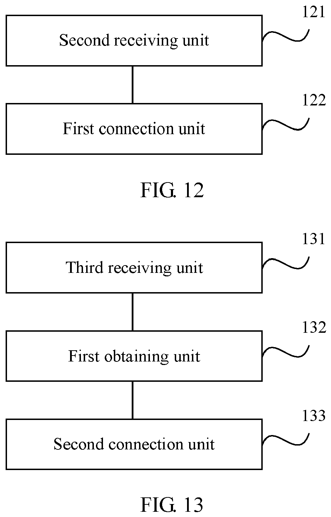

This embodiment provides a first terminal, configured to execute the method for establishing a connection by a terminal in the foregoing embodiment. As shown in FIG. 12, FIG. 12 is a schematic structural diagram of the first terminal according to this embodiment.

The first terminal in this embodiment includes a second receiving unit 121 and a first connection unit 122. The second receiving unit 121 is configured to receive a first access parameter sent by a second node, where the first access parameter is a first access parameter pre-stored by the second node and corresponding to a first node, the first access parameter is obtained by means of statistics collection according to a second access parameter reported by a second terminal, the second terminal is a terminal connecting to the first node, and the first node is a control node of a cell neighboring to a cell of the second node. The first connection unit 122 is configured to connect to the first node according to the first connection parameter.

The first access parameter includes a timing advance and/or a terminal transmit power, and the second access parameter includes a timing advance and/or a terminal transmit power. The second terminal is specifically a terminal connecting to the first node after disconnecting from the second node, or a terminal connecting to the first node while maintaining a connection to the second node.

A specific operation manner of the first terminal is the same as that in the foregoing embodiment, and details are not described herein again.

According to the first terminal in this embodiment, a first access parameter delivered by a second node is received, and a first node is connected according to the first access parameter. This avoids as much as possible a delay caused by obtaining the first access parameter by the first terminal, so as to reduce a delay generated during cell handover of the terminal, and improve user experience.

**Embodiment 17**

This embodiment provides a second terminal, configured to execute the method for establishing a connection by a terminal in the foregoing embodiment.

As shown in FIG. 13, the second terminal in this embodiment includes a third receiving unit 131, a first obtaining unit 132, and a second connection unit 133.

The third receiving unit 131 is configured to receive an instruction that is for reporting a second access parameter and that is sent by a currently connected second node, where the second terminal is a terminal needing to connect to a first node, and the first node is a control node of a cell neighboring to a cell of the second node. The first obtaining unit 132 is configured to obtain the second access parameter. The second connection unit 133 is configured to: connect to the first node according to the second access parameter, and report the second access parameter to the second node by using the first node, or directly report the second access parameter to the second node, so that the second node collects statistics about the second access parameter to generate a first access parameter, and when the second node determines that a currently connected first terminal needs to establish a connection to the first node, obtains the pre-stored first access parameter corresponding to the first node, and delivers the first access parameter to the first terminal, so that the first terminal connects to the first node according to the first access parameter.

The first access parameter includes a timing advance and/or a terminal transmit power, and the second access parameter includes a timing advance and/or a terminal transmit power.

A specific operation method of the second terminal in this embodiment is the same as that in the foregoing embodiment, and details are not described herein again.

According to the second terminal in this embodiment, a second access parameter is sent to a second node, so that the second node collects statistics about the second access parameter to generate and store a first access parameter, and in a subsequent communications process, when a currently connected first terminal needs to connect to a first node, the first access parameter that is obtained by means of statistics collection in advance and is corresponding to the first node is obtained and directly delivered to the first terminal for use. This avoids as much as possible a delay caused by obtaining the first access parameter, so as to reduce a delay generated during cell handover of the terminal, and improve user experience.

**Embodiment 18**

This embodiment provides a second terminal, configured to execute the method for establishing a connection by a terminal in the foregoing embodiment.

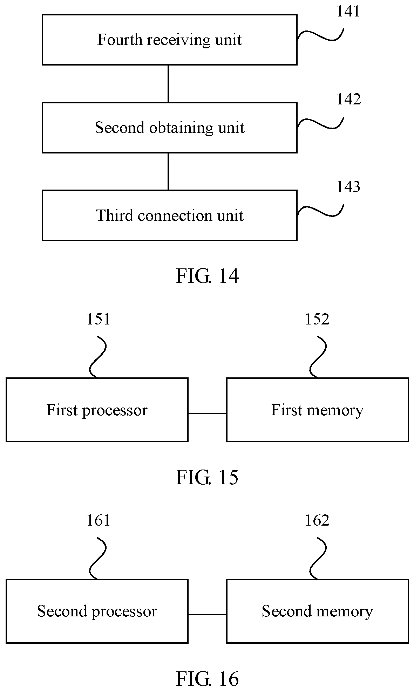

As shown in FIG. 14, the second terminal in this embodiment includes a fourth receiving unit 141, a second obtaining unit 142, and a third connection unit 143.

The fourth receiving unit 141 in this embodiment is configured to receive an instruction that is for reporting a second access parameter and that is sent by a currently connected first node, where the second access parameter is sent by the first node to a second node, the second node is a node connected to the second terminal before the second terminal establishes a connection to the first node, and the first node is a control node of a cell neighboring to a cell of the second node. The second obtaining unit 142 is configured to obtain the second access parameter. The third connection unit 143 is configured to: send the second access parameter to the second node by using the first node, or directly send the second access parameter to the currently connected second node, so that the second node collects statistics about the second access parameter to generate a first access parameter, and when the second node determines that a currently connected first terminal needs to establish a connection to the first node, obtains the pre-stored first access parameter corresponding to the first node, and delivers the first access parameter to the first terminal, so that the first terminal connects to the first node according to the first access parameter.

The first access parameter includes a timing advance and/or a terminal transmit power, and the second access parameter includes a timing advance and/or a terminal transmit power.

According to the second terminal in this embodiment, a second access parameter is sent to a second node, so that the second node collects statistics about the second access parameter to generate and store a first access parameter, and in a subsequent communications process, when a currently connected first terminal needs to connect to a first node, the first access parameter that is obtained by means of statistics collection in advance and is corresponding to the first node is obtained and directly delivered to the first terminal for use. This avoids as much as possible a delay caused by obtaining the first access parameter, so as to reduce a delay generated during cell handover of the terminal, and improve user experience.

**Embodiment 19**

This embodiment provides a second node, configured to execute the method for establishing a connection by a terminal in the foregoing embodiment.

As shown in FIG. 15, FIG. 15 is a schematic structural diagram of the second node according to this embodiment. The second node includes at least one first processor 151 and a first memory 152. The first memory 152 is configured to store executable program code, and the first processor 151 runs, by reading the executable program code stored in the first memory, a program corresponding to the executable program code so as to:

determine whether a currently connected first terminal needs to establish a connection to a first node, and if a determining result is yes, obtain a pre-stored first access parameter corresponding to the first node, where the first node is a control node of a cell neighboring to a cell of the second node, the first terminal currently connects to the second node, the first access parameter is obtained by means of statistics collection according to a second access parameter reported by a second terminal, and the second terminal is a terminal connecting to the first node; and deliver the first access parameter to the first terminal, so that the first terminal connects to the first node according to the first access parameter.

Optionally, before the pre-stored first access parameter corresponding to the first node is obtained, the first processor 151 runs, by reading the executable program code stored in the first memory 152, the program corresponding to the executable program code so as to: send, to the second terminal, an instruction for reporting the second access parameter, where the second terminal is the terminal connecting to the first node; and receive the second access parameter sent by the first node and reported by the second terminal, and store the second access parameter; or

the second node sends, to the first node, an instruction for reporting the second access parameter, so that the first node sends, to the second terminal, the instruction for reporting the second access parameter, where the second terminal is the terminal connecting to the first node; and the second node receives the second access parameter sent by the first node and reported by the second terminal, and stores the second access parameter; or

the second node sends, to the first node, an instruction for reporting the second access parameter; and the second node receives the second access parameter sent by the first node, and stores the second access parameter; or

the second node sends, to the second terminal, an instruction for reporting the second access parameter, where the second terminal is the terminal connecting to the first node; and the second node receives the second access parameter reported by the second terminal.

Optionally, before the pre-stored first access parameter corresponding to the first node is obtained, the first processor 151 runs, by reading the executable program code stored in the first memory 152, the program corresponding to the executable program code so that:

The second node consecutively obtains N second access parameters corresponding to the first node, where N is a positive integer; and

if the second node determines that the N second access parameters have a same value, the second node uses the value of the N second access parameters as the final first access parameter corresponding to the first node.

The first access parameter includes a timing advance and/or a terminal transmit power, and the second access parameter includes a timing advance and/or a terminal transmit power.

A specific operation manner of the second node in this embodiment is the same as that in the foregoing embodiment, and details are not described herein again.

According to the second node in this embodiment, a second access parameter is obtained by means of statistics collection in advance to generate and store a first access parameter, so that when a currently connected first terminal needs to connect to a first node, the first access parameter that is obtained by means of statistics collection in advance and is corresponding to the first node is obtained and directly delivered to the first terminal for use. This avoids as much as possible a delay caused by obtaining the first access parameter, so as to reduce a delay generated during cell handover of the terminal, and improve user experience.

**Embodiment 20**

This embodiment provides a first terminal, configured to execute the method for establishing a connection by a terminal in the foregoing embodiment.

As shown in FIG. 16, FIG. 16 is a schematic structural diagram of the first terminal according to this embodiment. The first terminal includes at least one second processor 161 and a second memory 162. The second memory 161 is configured to store executable program code, and the second processor 162 runs, by reading the executable program code stored in the second memory 162, a program corresponding to the executable program code so as to:

receive a first access parameter sent by a second node, where the first access parameter is a first access parameter pre-stored by the second node and corresponding to a first node, the first node is a control node of a cell neighboring to a cell of the second node, the first access parameter is obtained by means of statistics collection according to a second access parameter reported by a second terminal, and the second terminal is a terminal connecting to the first node; and

connect to the first node according to the first connection parameter.

The second terminal is specifically a terminal connecting to the first node after disconnecting from the second node, or a terminal connecting to the first node while maintaining a connection to the second node.

The first access parameter in this embodiment includes a timing advance and/or a terminal transmit power, and the second access parameter includes a timing advance and/or a terminal transmit power.

A specific operation method of the first terminal in this embodiment is the same as that in the foregoing embodiment, and details are not described herein again.

According to the method for establishing a connection by a terminal in this embodiment, a second access parameter is obtained by means of statistics collection in advance to generate and store a first access parameter, so that when a currently connected first terminal needs to connect to a first node, the pre-stored first access parameter corresponding to the first node is obtained and directly delivered to the first terminal for use. This avoids as much as possible a delay caused by obtaining the first access parameter, so as to reduce a delay generated during cell handover of the terminal, and improve user experience.

**Embodiment 21**

This embodiment provides a second terminal, configured to execute the method for establishing a connection by a terminal in the foregoing embodiment.

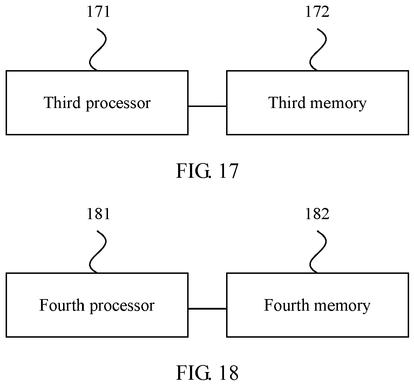

As shown in FIG. 17, FIG. 17 is a schematic structural diagram of the second terminal according to this embodiment. The second terminal includes at least one third processor 171 and a third memory 172. The third memory 172 is configured to store executable program code, and the third processor 171 runs, by reading the executable program code stored in the third memory 172, a program corresponding to the executable program code so as to:

receive an instruction that is for reporting a second access parameter and that is sent by a currently connected second node, where the second terminal is a terminal needing to connect to a first node;
obtain the second access parameter; and
connect to the first node according to the second access parameter, where the first node is a control node of a cell neighboring to a cell of the second node, and report the second access parameter to the second node by using the first node, or directly report the second access parameter to the second node, so that the second node collects statistics about the second access parameter to generate a first access parameter, and when the second node determines that a currently connected first terminal needs to establish a connection to the first node, obtains the pre-stored first access parameter corresponding to the first node, and delivers the first access parameter to the first terminal, so that the first terminal connects to the first node according to the first access parameter.

The second terminal is specifically a terminal connecting to the first node after disconnecting from the second node, or a terminal connecting to the first node while maintaining a connection to the second node.

The first access parameter in this embodiment includes a timing advance and/or a terminal transmit power, and the second access parameter includes a timing advance and/or a terminal transmit power.

According to this embodiment, a second terminal sends a second access parameter to a second node, so that the second node collects statistics about the second access parameter to generate and store a first access parameter, and in a subsequent communications process, when a currently connected first terminal needs to connect to a first node, the first access parameter that is obtained by means of statistics collection in advance and is corresponding to the first node is obtained and directly delivered to the first terminal for use. This avoids as much as possible a delay caused by obtaining the first access parameter, so as to reduce a delay generated during cell handover of the terminal, and improve user experience.

**Embodiment 22**

This embodiment provides a second terminal, configured to execute the method for establishing a connection by a terminal in the foregoing embodiment.

As shown in FIG. 18, FIG. 18 is a schematic structural diagram of the second terminal according to this embodiment. The second terminal includes at least one fourth processor 181 and a fourth memory 182. The fourth memory 182 is configured to store executable program code, and the fourth processor 181 runs, by reading the executable program code stored in the fourth memory 182, a program corresponding to the executable program code so as to:

receive an instruction that is for reporting a second access parameter and that is sent by a currently connected first node, where the second access parameter is sent by the first node to a second node, the second node is a node connected to the second terminal before the second terminal establishes a connection to the first node, and the first node is a control node of a cell neighboring to a cell of the second node;
obtain the second access parameter; and
send the second access parameter to the second node by using the first node, or directly send the second access parameter to the currently connected second node, so that the second node collects statistics about the second access parameter to generate a first access parameter, and when the second node determines that a currently connected first terminal needs to establish a connection to the first node, obtains the pre-stored first access parameter corresponding to the first node, and delivers the first access parameter to the first terminal, so that the first terminal connects to the first node according to the first access parameter.

The second terminal is specifically a terminal connecting to the first node after disconnecting from the second node, or a terminal connecting to the first node while maintaining a connection to the second node.

The first access parameter in this embodiment includes a timing advance and/or a terminal transmit power, and the second access parameter includes a timing advance and/or a terminal transmit power.

According to this embodiment, a second terminal sends a second access parameter to a second node, so that the second node collects statistics about the second access parameter to generate and store a first access parameter, and in a subsequent communications process, when a currently connected first terminal needs to connect to a first node, the first access parameter that is obtained by means of statistics collection in advance and is corresponding to the first node is obtained and directly delivered to the first terminal for use. This avoids as much as possible a delay caused by obtaining the first access parameter, so as to reduce a delay generated during cell handover of the terminal, and improve user experience.

Finally, it should be noted that: The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

**Claims**

1.  A method for establishing a connection by a terminal, comprising:

determining, by a second node, whether a currently connected first terminal needs to establish a connection to a first node, and if a determining result is yes, obtaining a pre-stored first access parameter corresponding to the first node, wherein the first node is a control node of a cell neighboring to a cell of the second node, the first terminal currently connects to the second node, the first access parameter is obtained by means of statistics collection according to a second access parameter reported by a second terminal, and the second terminal is a terminal connecting to the first node; and
delivering, by the second node, the first access parameter to the first terminal, so that the first terminal connects to the first node according to the first access parameter.

2.  The method for establishing a connection by a terminal according to claim 1, wherein before the obtaining a pre-stored first access parameter corresponding to the first node, the method further comprises:

sending, by the second node to the second terminal, an instruction for reporting the second access parameter, wherein the second terminal is the terminal connecting to the first node; and

receiving, by the second node, the second access parameter sent by the first node and reported by the second terminal, and storing the second access parameter.

3.  The method for establishing a connection by a terminal according to claim 1, wherein before the obtaining a pre-stored first access parameter corresponding to the first node, the method further comprises:

sending, by the second node to the first node, an instruction for reporting the second access parameter, so that the first node sends, to the second terminal, the instruction for reporting the second access parameter, wherein the second terminal is the terminal connecting to the first node; and

receiving, by the second node, the second access parameter sent by the first node and reported by the second terminal, and storing the second access parameter.

4.  The method for establishing a connection by a terminal according to claim 1, wherein before the obtaining a pre-stored first access parameter corresponding to the first node, the method further comprises:

sending, by the second node to the first node, an instruction for reporting the second access parameter; and

receiving, by the second node, the second access parameter sent by the first node, and storing the second access parameter.

5.  The method for establishing a connection by a terminal according to claim 1, wherein before the obtaining a pre-stored first access parameter corresponding to the first node, the method further comprises:

sending, by the second node to the second terminal, an instruction for reporting the second access parameter, wherein the second terminal is the terminal connecting to the first node; and

receiving, by the second node, the second access parameter reported by the second terminal.

6.  The method for establishing a connection by a terminal according to claim 1, wherein the second terminal is specifically a terminal connecting to the first node after disconnecting from the second node, or a terminal connecting to the first node while maintaining a connection to the second node.

7.  The method for establishing a connection by a terminal according to any one of claims 1 to 6, wherein before the obtaining a pre-stored first access parameter corresponding to the first node, the method further comprises:

consecutively obtaining, by the second node, N second access parameters corresponding to the first node, wherein N is a positive integer; and

if the second node determines that the N second access parameters have a same value, using the value of the N second access parameters as the final first access parameter corresponding to the first node.

8.  The method for establishing a connection by a terminal according to any one of claims 1 to 7, wherein the first access parameter comprises a timing advance and/or a terminal transmit power, and the second access parameter comprises a timing advance and/or a terminal transmit power.

9.  A method for establishing a connection by a terminal, comprising:

receiving, by a first terminal, a first access parameter sent by a second node, wherein the first access parameter is a first access parameter pre-stored by the second node and corresponding to a first node, the first access parameter is obtained by means of statistics collection according to a second access parameter reported by a second terminal, the second terminal is a terminal connecting to the first node, and the first node is a control node of a cell neighboring to a cell of the second node; and

connecting, by the first terminal, to the first node according to the first connection parameter.

10.  The method for establishing a connection by a terminal according to claim 9, wherein the second terminal is specifically a terminal connecting to the first node after disconnecting from the second node, or a terminal connecting to the first node while maintaining a connection to the second node.

11.  The method for establishing a connection by a terminal according to claim 9 or 10, wherein the first access parameter comprises a timing advance and/or a terminal transmit power, and the second access parameter comprises a timing advance and/or a terminal transmit power.

12. A method for establishing a connection by a terminal, comprising:

receiving, by a second terminal, an instruction that is for reporting a second access parameter and that is sent by a currently connected second node, wherein the second terminal is a terminal needing to connect to a first node;

obtaining, by the second terminal, the second access parameter; and

connecting, by the second terminal, to the first node according to the second access parameter, wherein the first node is a control node of a cell neighboring to a cell of the second node, and reporting the second access parameter to the second node by using the first node, or directly reporting the second access parameter to the second node, so that the second node collects statistics about the second access parameter to generate a first access parameter, and when the second node determines that a currently connected first terminal needs to establish a connection to the first node, obtains the pre-stored first access parameter corresponding to the first node, and delivers the first access parameter to the first terminal, so that the first terminal connects to the first node according to the first access parameter.

13. The method for establishing a connection by a terminal according to claim 12, wherein the second terminal is specifically a terminal connecting to the first node after disconnecting from the second node, or a terminal connecting to the first node while maintaining a connection to the second node.

14. The method for establishing a connection by a terminal according to claim 12 or 13, wherein the first access parameter comprises a timing advance and/or a terminal transmit power, and the second access parameter comprises a timing advance and/or a terminal transmit power.

15. A method for establishing a connection by a terminal, comprising:

receiving, by a second terminal, an instruction that is for reporting a second access parameter and that is sent by a currently connected first node, wherein the second access parameter is sent by the first node to the second node, the second node is a node connected to the second terminal before the second terminal establishes a connection to the first node, and the first node is a control node of a cell neighboring to a cell of the second node;

obtaining, by the second terminal, the second access parameter; and

sending, by the second terminal, the second access parameter to the second node by using the first node, or directly sending, by the second terminal, the second access parameter to the currently connected second node, so that the second node collects statistics about the second access parameter to generate a first access parameter, and when the second node determines that a currently connected first terminal needs to establish a connection to the first node, obtains the pre-stored first access parameter corresponding to the first node, and delivers the first access parameter to the first terminal, so that the first terminal connects to the first node according to the first access parameter.

16. The method for establishing a connection by a terminal according to claim 15, wherein the second terminal is specifically a terminal connecting to the first node after disconnecting from the second node, or a terminal connecting to the first node while maintaining a connection to the second node.

17. The method for establishing a connection by a terminal according to claim 15 or 16, wherein the first access parameter comprises a timing advance and/or a terminal transmit power, and the second access parameter comprises a timing advance and/or a terminal transmit power.

18. A second node, comprising:

a first judging unit, configured to: determine whether a currently connected first terminal needs to establish a connection to a first node, and if a determining result is yes, obtain a pre-stored first access parameter corresponding to the first node, wherein the first node is a control node of a cell neighboring to a cell of the second node, the first terminal currently connects to the second node, the first access parameter is obtained by means of statistics collection according to a second access parameter reported by a second terminal, and the second terminal is a terminal connecting to the first node; and

a first sending unit, configured to deliver the first access parameter to the first terminal, so that the first terminal connects to the first node according to the first access parameter.

19. The second node according to claim 18, further comprising:

a second sending unit, configured to send, to the second terminal, an instruction for reporting the second access parameter, wherein the second terminal is the terminal connecting to the first node; and
a first receiving unit, configured to: receive the second access parameter sent by the first node and reported by the second terminal, and store the second access parameter.

20. The second node according to claim 18, further comprising:

a second sending unit, configured to send, to the first node, an instruction for reporting the second access parameter, so that the first node sends, to the second terminal, the instruction for reporting the second access parameter, wherein the second terminal is the terminal connecting to the first node; and
a first receiving unit, configured to: receive the second access parameter sent by the first node and reported by the second terminal, and store the second access parameter.

21. The second node according to claim 18, further comprising:

a second sending unit, configured to send, to the first node, an instruction for reporting the second access parameter; and
a first receiving unit, configured to: receive the second access parameter sent by the first node, and store the second access parameter.

22. The second node according to claim 18, further comprising:

a second sending unit, configured to send, to the second terminal, an instruction for reporting the second access parameter, wherein the second terminal is the terminal connecting to the first node; and
a first receiving unit, configured to receive the second access parameter reported by the second terminal.

23. The second node according to any one of claims 18 to 22, wherein the second node further comprises a determining unit, and the determining unit is configured to:

consecutively obtain N second access parameters corresponding to the first node, wherein N is a positive integer; and
if it is determined that the N second access parameters have a same value, use the value of the N second access parameters as the final first access parameter corresponding to the first node.

24. The second node according to any one of claims 18 to 23, wherein the first access parameter comprises a timing advance and/or a terminal transmit power, and the second access parameter comprises a timing advance and/or a terminal transmit power.

25. A first terminal, comprising:

a second receiving unit, configured to receive a first access parameter sent by a second node, wherein the first access parameter is a first access parameter pre-stored by the second node and corresponding to a first node, the first node is a control node of a cell neighboring to a cell of the second node, the first access parameter is obtained by means of statistics collection according to a second access parameter reported by a second terminal, and the second terminal is a terminal connecting to the first node; and
a first connection unit, configured to connect to the first node according to the first connection parameter.

26. The first terminal according to claim 25, wherein the first access parameter comprises a timing advance and/or a terminal transmit power, and the second access parameter comprises a timing advance and/or a terminal transmit power.

27. A second terminal, comprising:

a third receiving unit, configured to receive an instruction that is for reporting a second access parameter and that is sent by a currently connected second node, wherein the second terminal is a terminal needing to connect to a first node, and the first node is a control node of a cell neighboring to a cell of the second node;

a first obtaining unit, configured to obtain the second access parameter; and

a second connection unit, configured to: connect to the first node according to the second access parameter, and report the second access parameter to the second node by using the first node, or directly report the second access parameter to the second node, so that the second node collects statistics about the second access parameter to generate a first access parameter, and when the second node determines that a currently connected first terminal needs to establish a connection to the first node, obtains the pre-stored first access parameter corresponding to the first node, and delivers the first access parameter to the first terminal, so that the first terminal connects to the first node according to the first access parameter.

28. The second terminal according to claim 27, wherein the first access parameter comprises a timing advance and/or a terminal transmit power, and the second access parameter comprises a timing advance and/or a terminal transmit power.

29. A second terminal, comprising:

a fourth receiving unit, configured to receive an instruction that is for reporting a second access parameter and that is sent by a currently connected first node, wherein the second access parameter is sent by the first node to the second node, the second node is a node connected to the second terminal before the second terminal establishes a connection to the first node, and the first node is a control node of a cell neighboring to a cell of the second node;

a second obtaining unit, configured to obtain the second access parameter; and

a third connection unit, configured to: send the second access parameter to the second node by using the first node, or directly send the second access parameter to the currently connected second node, so that the second node collects statistics about the second access parameter to generate a first access parameter, and when the second node determines that a currently connected first terminal needs to establish a connection to the first node, obtains the pre-stored first access parameter corresponding to the first node, and delivers the first access parameter to the first terminal, so that the first terminal connects to the first node according to the first access parameter.

30. The second terminal according to claim 29, wherein the first access parameter comprises a timing advance and/or a terminal transmit power, and the second access parameter comprises a timing advance and/or a terminal transmit power.

31. A second node, comprising at least one first processor and a first memory, wherein the first memory is configured to store executable program code, and the first processor runs, by reading the executable program code stored in the first memory, a program corresponding to the executable program code so as to:

determine whether a currently connected first terminal needs to establish a connection to a first node, and if a determining result is yes, obtain a pre-stored first access parameter corresponding to the first node, wherein the first node is a control node of a cell neighboring to a cell of the second node, the first terminal currently connects to the second node, the first access parameter is obtained by means of statistics collection according to a second access parameter reported by a second terminal, and the second terminal is a terminal connecting to the first node; and

deliver the first access parameter to the first terminal, so that the first terminal connects to the first node according to the first access parameter.

32. A first terminal, comprising at least one second processor and a second memory, wherein the second memory is configured to store executable program code, and the second processor runs, by reading the executable program code stored in the second memory, a program corresponding to the executable program code so as to:

receive a first access parameter sent by a second node, wherein the first access parameter is a first access parameter pre-stored by the second node and corresponding to a first node, the first node is a control node of a cell neighboring to a cell of the second node, the first access parameter is obtained by means of statistics collection according to a second access parameter reported by a second terminal, and the second terminal is a terminal connecting to the first node; and

connect to the first node according to the first connection parameter.

**33.** A second terminal, comprising at least one third processor and a third memory, wherein the third memory is configured to store executable program code, and the third processor runs, by reading the executable program code stored in the third memory, a program corresponding to the executable program code so as to:

receive an instruction that is for reporting a second access parameter and that is sent by a currently connected second node, wherein the second terminal is a terminal needing to connect to a first node;

obtain the second access parameter; and

connect to the first node according to the second access parameter, wherein the first node is a control node of a cell neighboring to a cell of the second node, and report the second access parameter to the second node by using the first node, or directly report the second access parameter to the second node, so that the second node collects statistics about the second access parameter to generate a first access parameter, and when the second node determines that a currently connected first terminal needs to establish a connection to the first node, obtains the pre-stored first access parameter corresponding to the first node, and delivers the first access parameter to the first terminal, so that the first terminal connects to the first node according to the first access parameter.

**34.** A second terminal, comprising at least one fourth processor and a fourth memory, wherein the fourth memory is configured to store executable program code, and the fourth processor runs, by reading the executable program code stored in the fourth memory, a program corresponding to the executable program code so as to:

receive, by the second terminal, an instruction that is for reporting a second access parameter and that is sent by a currently connected first node, wherein the second access parameter is sent by the first node to the second node, the second node is a node connected to the second terminal before the second terminal establishes a connection to the first node, and the first node is a control node of a cell neighboring to a cell of the second node;

obtain, by the second terminal, the second access parameter; and

send, by the second terminal, the second access parameter to the second node by using the first node, or directly send, by the second terminal, the second access parameter to the currently connected second node, so that the second node collects statistics about the second access parameter to generate a first access parameter, and when the second node determines that a currently connected first terminal needs to establish a connection to the first node, obtains the pre-stored first access parameter corresponding to the first node, and delivers the first access parameter to the first terminal, so that the first terminal connects to the first node according to the first access parameter.

A second node determines whether a currently connected first terminal needs to establish a connection to a first node, and if a determining result is yes, obtains a pre-stored first access parameter corresponding to the first node — 110

The second node delivers the first access parameter to the first terminal, so that the first terminal connects to the first node according to the first access parameter — 120

FIG. 1A

A second node determines whether a currently connected first terminal needs to be handed over to a first node, and if a determining result is yes, obtains a pre-stored first access parameter corresponding to the first node, where the first node is a control node of a cell neighboring to a cell of the second node, and the first terminal currently connects to the second node — 101

The second node delivers the first access parameter to the first terminal, so that the first terminal is handed over to the first node according to the first access parameter — 102

FIG. 1B

FIG. 2

| 310 | 330 | 320 |
|---|---|---|
| Second node | First node | Second terminal |

301. Send a handover request, where the handover request may include an instruction for instructing the first node 330 to send a second access parameter sent by the second terminal 320

302. Confirm the handover request

303. Send a handover command

304. Obtain the second access parameter

305. Send a handover confirmation command

306. Send the instruction for reporting the second access parameter

307. Report the second access parameter

308. Send the second access parameter

309. Store the second access parameter

FIG. 3

A master node determines whether a currently connected first terminal needs to connect to a first slave node, and if a determining result is yes, obtains a pre-stored first access parameter corresponding to the first slave node, where the first access parameter is obtained by means of statistics collection according to a second access parameter reported by a second terminal, and the second terminal is a terminal connecting to the master node and needing to connect to the first slave node

401

The master node delivers the first access parameter to the first terminal, so that the first terminal connects to the first slave node according to the first access parameter

402

FIG. 4

When determining that a second terminal needs to change a connection from a second slave node to a first slave node, a master node sends an RRC connection reconfiguration message to the second terminal, to instruct the second terminal to change the connection, where the RRC connection reconfiguration message includes signaling instructing the second terminal to report a second access parameter

501

The second terminal implements uplink synchronization and downlink synchronization with the first slave node, and sends the obtained second access parameter to the master node, so that the master node stores the second access parameter corresponding to the first slave node

502

The second terminal sends a connection confirmation command to the second node, where the connection confirmation command indicates that the second terminal completes the connection

503

FIG. 5

When determining that a second terminal needs to change a connection from a second slave node to a first slave node, a master node sends an RRC connection reconfiguration message to the second terminal, to instruct the second terminal to change the connection, and sends the first slave node an instruction for sending a second access parameter

601

The second terminal implements uplink synchronization and downlink synchronization with the first slave node, and sends the obtained second access parameter to the first slave node

602

The first slave node sends the second access parameter to the master node, so that the master node stores the second access parameter corresponding to the first slave node

603

The second terminal sends a connection confirmation command to the master node, where the connection confirmation command indicates that the second terminal completes the connection

604

FIG. 6

A first terminal receives a first access parameter sent by a second node, where the first access parameter is a first access parameter pre-stored by the second node and corresponding to a first node, the first access parameter is obtained by means of statistics collection according to a second access parameter reported by a second terminal, the second terminal is a terminal connecting to the first node, and the first node is a control node of a cell neighboring to a cell of the second node

701

The first terminal connects to the first node according to the first connection parameter

702

FIG. 7

A second terminal receives an instruction that is for reporting a second access parameter and that is sent by a currently connected second node, where the second terminal is a terminal needing to connect to a first node

801

The second terminal obtains the second access parameter

802

The second terminal connects to the first node according to the second access parameter, where the first node is a control node of a cell neighboring to a cell of the second node, and reports the second access parameter to the second node by using the first node, or directly reports the second access parameter to the second node, so that the second node collects statistics about the second access parameter to generate a first access parameter, and when the second node determines that a currently connected first terminal needs to establish a connection to the first node, obtains the pre-stored first access parameter corresponding to the first node, and delivers the first access parameter to the first terminal, so that the first terminal connects to the first node according to the first access parameter

803

FIG. 8

A second terminal receives an instruction that is for reporting a second access parameter and that is sent by a currently connected first node, where the second access parameter is sent by the first node to a second node, the second node is a node connected to the second terminal before the second terminal establishes a connection to the first node, and the first node is a control node of a cell neighboring to a cell of the second node

901

The second terminal obtains the second access parameter

902

The second terminal sends the second access parameter to the second node by using the first node, or the second terminal directly sends the second access parameter to the currently connected second node, so that the second node collects statistics about the second access parameter to generate a first access parameter, and when the second node determines that a currently connected first terminal needs to establish a connection to the first node, obtains the pre-stored first access parameter corresponding to the first node, and delivers the first access parameter to the first terminal, so that the first terminal connects to the first node according to the first access parameter

903

FIG. 9

First judging unit

115

First sending unit

116

FIG. 10A

114

Determining unit

115

First judging unit

116

First sending unit

**FIG. 10B**

117

Second sending unit

118

First receiving unit

114

Determining unit

115

First judging unit

116

First sending unit

**FIG. 11**

```
┌─────────────────────────────────┐        121
│     Second receiving unit       │ ╭─╮
└─────────────────────────────────┘
                │
┌─────────────────────────────────┐        122
│      First connection unit      │ ╭─╮
└─────────────────────────────────┘
```

FIG. 12

```
┌─────────────────────────────────┐        131
│       Third receiving unit      │ ╭─╮
└─────────────────────────────────┘
                │
┌─────────────────────────────────┐        132
│       First obtaining unit      │ ╭─╮
└─────────────────────────────────┘
                │
┌─────────────────────────────────┐        133
│      Second connection unit     │ ╭─╮
└─────────────────────────────────┘
```

FIG. 13

Fourth receiving unit — 141

Second obtaining unit — 142

Third connection unit — 143

FIG. 14

151

152

First processor — First memory

FIG. 15

161

162

Second processor — Second memory

FIG. 16

171                                172

Third processor          Third memory

FIG. 17

181                                182

Fourth processor        Fourth memory

FIG. 18

# INTERNATIONAL SEARCH REPORT

| International application No. |
| --- |
| PCT/CN2015/072646 |

## A. CLASSIFICATION OF SUBJECT MATTER

H04W 36/34 (2009.01) i

According to International Patent Classification (IPC) or to both national classification and IPC

## B. FIELDS SEARCHED

Minimum documentation searched (classification system followed by classification symbols)

H04W, H04Q

Documentation searched other than minimum documentation to the extent that such documents are included in the fields searched

Electronic data base consulted during the international search (name of data base and, where practicable, search terms used)

CNKI; CNPAT; EPODOC; WPI: obtain, advance, delay, handover, power, timing, sen+, paragraph?, timing advance, push, issue, transmission power, notic+, handoff, statistical, access, parameter, switch, acquire

## C. DOCUMENTS CONSIDERED TO BE RELEVANT

| Category* | Citation of document, with indication, where appropriate, of the relevant passages | Relevant to claim No. |
| --- | --- | --- |
| A | CN 103167574 A (HUAWEI TECHNOLOGIES CO., LTD.), 19 June 2013 (19.06.2013), the whole document | 1-34 |
| A | CN 101079769 A (HUAWEI TECHNOLOGIES CO., LTD.), 28 November 2007 (28.11.2007), the whole document | 1-34 |
| A | CN 101854684 A (BEIJING UNIVERSITY OF POSTS AND TELECOMMUNICATIONS), 06 October 2010 (06.10.2010), the whole document | 1-34 |
| A | US 2010232389 A1 (KYUNGPOOK NATIONAL UNIVERSITY INDUSTRY-ACADEMIC COOPERATION FOUNDATION), 16 September 2010 (16.09.2010), the whole document | 1-34 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 26 October 2015 (26.10.2015) | **20 November 2015 (20.11.2015)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **HU, Ruixian** Telephone No.: (86-10) **61648249** |
| --- | --- |

Form PCT/ISA/210 (second sheet) (July 2009)

**INTERNATIONAL SEARCH REPORT**
Information on patent family members

| | International application No. |
|---|---|
| | **PCT/CN2015/072646** |

| Patent Documents referred in the Report | Publication Date | Patent Family | Publication Date |
|---|---|---|---|
| CN 103167574 A | 19 June 2013 | US 2014308956 A1 | 16 October 2014 |
| | | WO 2013091515 A1 | 27 June 2013 |
| | | EP 2785122 A1 | 01 October 2014 |
| CN 101079769 A | 28 November 2007 | CN 101079769 B | 23 May 2012 |
| CN 101854684 A | 06 October 2010 | CN 101854684 B | 14 November 2012 |
| US 2010232389 A1 | 16 September 2010 | KR 100759438 B1 | 20 September 2007 |
| | | WO 2007111485 A1 | 04 October 2007 |

Form PCT/ISA/210 (patent family annex) (July 2009)